(19) Europäisches Patentamt / European Patent Office / Office européen des brevets

(11) **EP 4 607 842 A1**

(12) **EUROPEAN PATENT APPLICATION**

(43) Date of publication:
27.08.2025 Bulletin 2025/35

(21) Application number: 25157926.4

(22) Date of filing: 14.02.2025

(51) International Patent Classification (IPC):
*H04L 9/00* (2022.01)  *H04L 9/30* (2006.01)

(52) Cooperative Patent Classification (CPC):
**H04L 9/008; H04L 9/3093;** H04L 2209/122

| | |
|---|---|
| (84) Designated Contracting States:<br>**AL AT BE BG CH CY CZ DE DK EE ES FI FR GB GR HR HU IE IS IT LI LT LU LV MC ME MK MT NL NO PL PT RO RS SE SI SK SM TR**<br>Designated Extension States:<br>**BA**<br>Designated Validation States:<br>**GE KH MA MD TN**<br><br>(30) Priority: 16.02.2024 KR 20240022548<br>05.08.2024 KR 20240103839<br>10.10.2024 KR 20240137880<br>11.10.2024 KR 20240138655<br>12.02.2025 KR 20250018059<br><br>(71) Applicant: **CRYPTO LAB INC.**<br>**Gwanak-gu, Seoul 08826 (KR)** | (72) Inventors:<br>• **Cheon, Jung Hee**<br>**08826 Seoul (KR)**<br>• **Choe, Hyeongmin**<br>**06326 Seoul (KR)**<br>• **Kang, Minsik**<br>**08826 Seoul (KR)**<br>• **Kim, Jaehyung**<br>**Stanford, CA 94305 (US)**<br><br>(74) Representative: **Dragotti & Associati S.R.L.**<br>**Via Nino Bixio, 7**<br>**20129 Milano (IT)** |

(54) **ELECTRONIC APPARATUS AND CONTROL METHOD FOR EFFICIENT OPERATIONS ON CIPHERTEXTS OF RNS BASED FULLY HOMOMORPHIC ENCRYPTION**

(57) Provided are an electronic apparatus and a control method thereof. The apparatus includes: a memory for storing at least one instruction; and a processor, wherein the processor may be configured to acquire the homomorphic ciphertext by using a Residue Number System (RNS) modulus including a plurality of moduli each having a size corresponding to a machine word size, and perform an operation on the homomorphic ciphertext by using rational rescaling.

FIG. 3

EP 4 607 842 A1

**Description**

[Technical Field

The present disclosure relates to an electronic apparatus and a control method thereof, and more particularly, to an electronic apparatus for performing operations on a homomorphic ciphertext and a control method thereof.

[Background Art]

As communication technology advances and electronic apparatuses become more widespread, continuous efforts are being made to ensure secure communication between the electronic apparatuses. Accordingly, encryption and decryption technology are used in most communication environments.

If a message encrypted by the encryption technology is transmitted to the other party, the other party is required to perform decryption to use the message. In this case, the other party may waste resources and time in a process of decrypting encrypted data. In addition, the message may be easily leaked to a third party if the third party hacks the message while the other party temporarily decrypts the message for operation.

To solve these problems, homomorphic encryption methods are being studied. Homomorphic encryption may acquire the same result as an encrypted value acquired after performing an operation on a plaintext, even if the operation is performed on a ciphertext itself acquired without decrypting encrypted information. Therefore, various operations may be performed without decrypting the ciphertext.

In particular, Cheon-Kim-Kim-Song (CKKS) scheme is a Fully Homomorphic Encryption (FHE) scheme that allows approximate computation of real-valued encrypted data. In CKKS encoding, the message is multiplied by a scaling factor and rounded to ensure precision. The scaling factor is squared during a multiplication process, and rescaling is thus required to reduce the scaling factor again. This process not only reduces the scaling factor but also reduces a ciphertext modulus, and bootstrapping is thus required to recover the modulus after multiple multiplications.

The implementation of the CKKS scheme adopts a Residue Number System (RNS) within CKKS (RNS-CKKS) for efficiency. In RNS-CKKS, the ciphertext modulus is composed of a product of Number Theoretic Transform (NTT) primes, which are referred to as RNS moduli. By Chinese Remainder Theorem (CRT), a modulus operation expressed as $Q = \Pi q_i$ may be decomposed into operations on $q_i$, i.e., NTT primes. However, the rescaling is allowed only for the NTT primes that divide the ciphertext modulus, this prime needs to be as large as the scaling factor. The NTT primes may be much smaller than a word size of the electronic apparatus, and a relationship between the modulus and the scaling factor may thus lead to computational inefficiency.

Most implementations select a scaling factor that is as small as possible to reduce modulus waste. The modulus is a limited resource and thus has a great impact on computational efficiency. In particular, it is important to efficiently distribute a limited modulus budget among various functions. Bootstrapping may consume a huge amount of modulus, and the amount of modulus left for homomorphic computation may thus usually be smaller. Therefore, saving modulus consumption is often the top priority, and the scaling factor is selected as small as possible. Meanwhile, the number of RNS moduli needs to be minimized for the efficiency. The ciphertext may be represented, calculated, and stored using each RNS modulus, computational and space complexity may be proportional to the number of RNS moduli included in the ciphertext modulus. In this regard, the efficiency may be maximized if the RNS modulus is selected as close as possible to the machine word size. However, this selection may conflict with the scaling factor minimization strategy described above. As a result, existing efficient implementations of CKKS may select one of the following two options:

Option 1) Minimize the number of RNS moduli by filling a given maximum modulus budget using word-sized NTT primes of the electronic apparatus; and
Option 2) Maximizing multiplication depth by filling the given maximum modulus budget using scaling factor-sized NTT primes.

Comparison of the two options above may be described as a tradeoff between flexibility and the efficiency. Option 1 may cover a wider range of applications with a single parameter set than Option 2, while being less computationally efficient. Option 2 requires regenerating a public parameter and an evaluation key depending on a circuit if a larger scaling factor is required.

In conclusion, given the conflict described above, it is beneficial to break the relationship between the RNS modulus and the scaling factor. If the RNS modulus and the scaling factor are selected independently, an overall computation speed may be improved by selecting a word-size RNS modulus and an application-dependent scaling factor.

[Disclosure]

[Technical Solution]

According to an embodiment of the present disclosure, provided is an electronic apparatus including: a memory for storing at least one instruction; and a processor, wherein the processor is configured to acquire a homomorphic ciphertext by using a Residue Number System (RNS) modulus including a plurality of moduli each having a size corresponding to a machine word size, and perform an operation on the homomorphic ciphertext by using rational rescaling.

The plurality of moduli may include sprout moduli composed of a product of primes each having a size less than or equal to the machine word size.

The processor may be configured to generate an intermediate modulus by resurrecting the sprout modulus, and acquire an output modulus by rescaling the intermediate modulus, the intermediate modulus being a multiple of the output modulus.

The processor may be configured to perform a key switching operation on the homomorphic ciphertext by using the sprout modulus.

In case that the sprout modulus is expressed as a product of $g_1$, which is a 31-bit Number Theoretic Transform (NTT) prime, $g_2$, which is a 16-bit NTT prime or in the form of $2^{16}+1$, and $g_3$, which is a value in the form of 2, the processor may be configured to process a product of $g_1$ and $g_2$ by using composite number-based NTT (Composite NTT) and process $g_3$ by using embedded NTT to thus integrate their results into $G_3$ if the machine word size is greater than 38 bits and less than or equal to 64 bits, and process $g_3$ by using the embedded NTT to thus acquire $G_3$ if the machine word size is less than or equal to 38 bits.

Two NTT processors may be used if the machine word size is greater than 38 bits and less than or equal to 64 bits, and one NTT processor may be used if the machine word size is less than or equal to 38 bits.

The processor may be configured to generate an intermediate modulus by upscaling the RNS modulus, perform a key switching operation on the intermediate modulus, and perform rescaling on the intermediate modulus on which the key switching operation is performed.

The processor may be configured to adjust the plurality of homomorphic ciphertexts having different moduli and scaling factors by using the rational rescaling.

According to an embodiment of the present disclosure, provided is a control method of an electronic apparatus, the method including: acquiring a homomorphic ciphertext by using a Residue Number System (RNS) modulus including a plurality of moduli each having a size corresponding to a machine word size included in the electronic apparatus; and performing an operation on the homomorphic ciphertext by using rational rescaling.

The plurality of moduli may include sprout moduli composed of a product of primes each having a size less than or equal to the machine word size.

The performing may include generating an intermediate modulus by resurrecting the sprout modulus, and acquiring an output modulus by rescaling the intermediate modulus, the intermediate modulus being a multiple of the output modulus.

In the performing, a key switching operation may be performed on the homomorphic ciphertext by using the sprout modulus.

In case that the sprout modulus is expressed as a product of $g_1$, which is a 31-bit Number Theoretic Transform (NTT) prime, g2, which is a 16-bit NTT prime or in the form of $2^{16}+1$, and $g_3$, which is a value in the form of 2, in the performing, a product of $g_1$ and $g_2$ may be processed by using Composite NTT, and $g_3$ may be processed by using embedded NTT to thus integrate their results into $G_3$ if the machine word size is greater than 38 bits and less than or equal to 64 bits, and $g_3$ may be processed by using the embedded NTT to thus acquire $G_3$ if the machine word size is less than or equal to 38 bits.

Two NTT processors may be used by the electronic apparatus if the machine word size is greater than 38 bits and less than or equal to 64 bits, and one NTT processor may be used by the electronic apparatus if the machine word size is less than or equal to 38 bits.

The performing may include generating an intermediate modulus by upscaling the RNS modulus, performing a key switching operation on the intermediate modulus, and performing rescaling on the intermediate modulus on which the key switching operation is performed.

The method may further include adjusting the plurality of homomorphic ciphertexts having different moduli and scaling factors by using the rational rescaling.

[Description of Drawings]

FIG. 1 is a diagram for describing a structure of a network system according to an embodiment of the present disclosure.

FIG. 2 is a block diagram showing a configuration of a computing device according to an embodiment of the present disclosure.

FIG. 3 is a diagram showing a conventional Residue Number System (RNS) modulus and a modulus according to an embodiment of the present disclosure.

FIGS. 4A and 4B are diagrams for describing rational rescaling according to an embodiment of the present disclosure.

FIGS. 5 and 6 are diagrams for describing a conventional key switching operation.

FIG. 7 is a diagram for describing an embodiment using a temporary ciphertext modulus chain according to an embodiment of the present disclosure.

FIGS. 8 to 11 are diagrams for describing an embodiment using a sprout modulus according to an embodiment of the present disclosure.

FIGS. 12 to 17 are diagrams for describing various algorithms for performing operations on the homomorphic ciphertext according to an embodiment of the present disclosure.

[Best Mode]

Hereinafter, the present disclosure is described in detail with reference to the accompanying drawings. Encryption/decryption may be applied as necessary to a process of transmitting information (or data) that is performed in the present disclosure, and an expression describing the process of transmitting the information (or data) in the present disclosure and the claims should be interpreted as including all cases of the encryption/decryption even if not separately mentioned. In the present disclosure, an expression such as "transmission (transfer) from A to B" or "reception from A to B" may include transmission (transfer) or reception while having another medium included in the middle, and may not necessarily express only the direct transmission (transfer) or reception from A to B.

In describing the present disclosure, a sequence of each step should be understood as non-restrictive unless a preceding step in the sequence of each step needs to logically and temporally precede a subsequent step. That is, except for the above exceptional case, the essence of the present disclosure is not affected even if a process described as the subsequent step is performed before a process described as the preceding step, and the scope of the present disclosure should also be defined regardless of the sequences of the steps. In addition, in this specification, "A or B" may be defined to indicate not only selectively indicating either A or B, but also including both A and B. In addition, a term "including" in the present disclosure may encompass a concept of further including other components in addition to components listed as being included.

The present disclosure only describes essential components necessary for describing the present disclosure, and does not mention components unrelated to the essence of the present disclosure. In addition, it should not be interpreted as an exclusive concept that the present disclosure includes only the mentioned components, and should be interpreted as a non-exclusive concept that the present disclosure may include other components as well.

In addition, in the present disclosure, a "value" may be defined as a concept that includes a vector as well as a scalar value. In addition, in the present disclosure, an expression such as "calculate" or "compute" may be replaced with an expression that generates a result of the corresponding calculation or computation. In addition, unless otherwise indicated, an operation on a ciphertext described below refers to a homomorphic operation. For example, addition on homomorphic ciphertexts indicates homomorphic addition on two homomorphic ciphertexts.

Mathematical operations and calculations in each step of the present disclosure described below may be implemented as computer operations by a known coding method and/or coding designed to be appropriate for the present disclosure to perform the corresponding operations or calculations.

Specific equations described below are illustratively provided among possible alternatives, and the scope of the present disclosure should not be construed as being limited to the equations mentioned in the present disclosure.

For convenience of description, the present disclosure defines the following notations.

$a \leftarrow D$: Select an element $a$ based on distribution D.

$s1, s2 \in R$: S1, S2: Each of S1 and S2 is an element belonging to a set R.

$\mathrm{mod}(q)$: Perform a modulus operation with an element $q$.

$\lfloor \cdot \rceil$: Round an internal value.

Hereinafter, various embodiments of the present disclosure are described in detail with reference to the accompanying drawings.

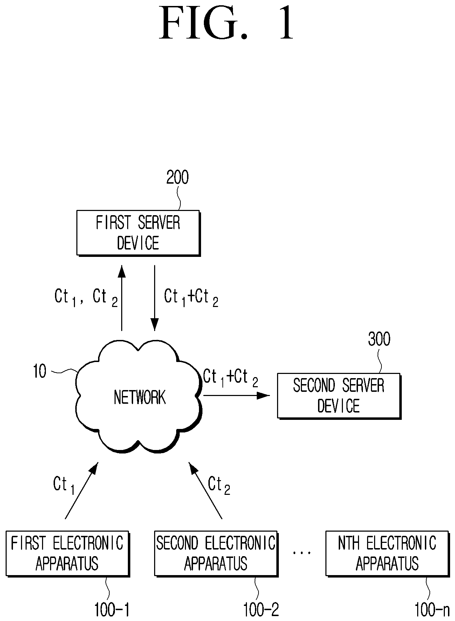

FIG. 1 is a diagram for describing a structure of a network system according to an embodiment of the present disclosure.

Referring to FIG. 1, the network system may include a plurality of electronic apparatuses 100-1 to 100-n, a first server device 200, and a second server device 300, and the respective components may be connected to each other via a network 10.

The network 10 may be implemented as any of various forms of wired/wireless communication networks, a broadcast communication network, an optical communication network, a cloud communication network or the like, and the respective devices may be connected to each other without a separate medium, such as wireless fidelity (Wi-Fi), Bluetooth, or Near Field Communication (NFC).

FIG. 1 shows that the plurality of electronic apparatuses 100-1 to 100-n are provided. However, the plurality of electronic apparatuses are not necessarily required to be used, and a single apparatus may be used instead. As an example, the electronic apparatuses 100-1 to 100-n may be implemented in various forms of apparatuses such as smartphones, tablets, game players, personal computers (PCs), laptop PCs, home servers, or kiosks, and may also be implemented in the form of home appliances using Internet of Things (IoT) functions.

A user may input various information by using the electronic apparatuses 100-1 to 100-n that the user uses. The input information may be stored in the electronic apparatuses 100-1 to 100-n themselves, or may also be transmitted to and stored in an external device for reasons such as storage capacity and security. As shown in FIG. 1, the first server device 200 may serve to store such information, and the second server device 300 may serve to utilize some or all of the information stored in the first server device 200.

Each of the electronic apparatuses 100-1 to 100-n may homomorphically encrypt the input information and transmit a homomorphic ciphertext to the first server device 200.

Each of the electronic apparatuses 100-1 to 100-n may include an error, i.e., encryption noise calculated in a process of performing homomorphic encryption, in the ciphertext. In detail, the homomorphic ciphertext generated by each of the electronic apparatuses 100-1 to 100-n may be generated in a form in which a result value including a message and an error value is restored if the homomorphic ciphertext is decrypted later utilizing a secret key.

As an example, the homomorphic ciphertext generated by each of the electronic apparatuses 100-1 to 100-n may be generated in a form that satisfies the following property if decrypted utilizing the secret key.

$$[\text{Equation 1}]$$

$$\text{Dec}(ct, sk) = <ct, sk> = M+e \pmod{q}$$

Here, < and > indicate dot product operation (or usual inner product), ct indicates the ciphertext, sk indicates the secret key, M indicates a plaintext message, e indicates the encryption error value, and mod q indicates a modulus of the ciphertext. q needs to be selected to be larger than a result value M multiplied by a scaling factor $\Delta$ to the message. If an absolute value of an error value e is sufficiently smaller than M, a decrypted value M+e of the ciphertext may be a value that may replace an original message by the same precision in a significant figure operation. Among decrypted data, the error may be disposed on the least significant bit (LSB) side, and M may be disposed on the next least significant bit side.

If a size of the message is too small or too large, the size may be adjusted using the scaling factor. If the scaling factor is used, not only a message in an integer form but also a message in a real number form may be encrypted, and its usability may thus be greatly increased. In addition, the size of the message may be adjusted utilizing the scaling factor to thus also adjust a size of an effective region, that is, a region where the messages exist in the ciphertext after the operation is performed.

In some embodiments, the modulus q of the ciphertext may be set and used in various forms. As an example, the modulus of the ciphertext may be set in a form of an exponential power $q=\Delta^L$ of the scaling factor $\Delta$. If $\Delta$ is 2, the modulus may be set to a value such as $q=2^{10}$.

In addition, the homomorphic ciphertext according to the present disclosure is described assuming that fixed point-numbers are used. However, the homomorphic ciphertext may also be applied even to a case where floating-point numbers are used.

The first server device 200 may store the received homomorphic ciphertext in a ciphertext state without decrypting the ciphertext.

The second server device 300 may request a specific processing result for the homomorphic ciphertext from the first server device 200. The first server device 200 may perform a specific operation based on the request from the second server device 300 and then transmit its result to the second server device 300.

As an example, if ciphertexts ct1 and ct2 transmitted from the two electronic apparatuses 100-1 and 100-2 are stored in the first server device 200, the second server device 300 may request the first server device 200 for a value acquired by combining information provided by the two electronic apparatuses 100-1 and 100-2. The first server device 200 may perform an operation for combining the two ciphertexts based on the request and then transmit a result value ct1 + ct2 to the second server device 300.

Due to a property of the homomorphic ciphertext, the first server device 200 may perform the operation without decrypting the ciphertext, and the result value may also be generated in a ciphertext form. In the present disclosure, the result value acquired using the operation is referred to as an operation result ciphertext.

The first server device 200 may transmit the operation result ciphertext to the second server device 300. The second server device 300 may decrypt the received operation result ciphertext to thus acquire the operation result value of data included in each homomorphic ciphertext.

Meanwhile, the electronic apparatus 100 may acquire the homomorphic ciphertext by using a Residue Number System (RNS) modulus including the plurality of moduli each having a size corresponding to a word size of the electronic apparatus 100, and use rational rescaling, thereby performing an operation on the homomorphic ciphertext. In one or more embodiments, the plurality of moduli may include sprout moduli composed of a product of primes each having a size less than or equal to the word size, and the electronic apparatus 100 may perform various operations (e.g., key switching operation) on the homomorphic ciphertext by using the sprout modulus. In one or more embodiments, the electronic apparatus 100 may generate an intermediate modulus by upscaling the RNS modulus, perform the key switching operation on the intermediate modulus, and perform rescaling on the intermediate modulus on which the key switching operation is performed, thereby performing the key switching operation on the homomorphic ciphertext.

In this way, the electronic apparatus 100 may perform efficient multiplication operations while minimizing the number of RNS moduli, thereby enabling a faster operation on the homomorphic ciphertext.

Meanwhile, FIG. 1 shows a case where the encryption is performed by the first electronic apparatus and the second electronic apparatus, and the second server device performs the decryption, and the present disclosure is not necessarily limited thereto.

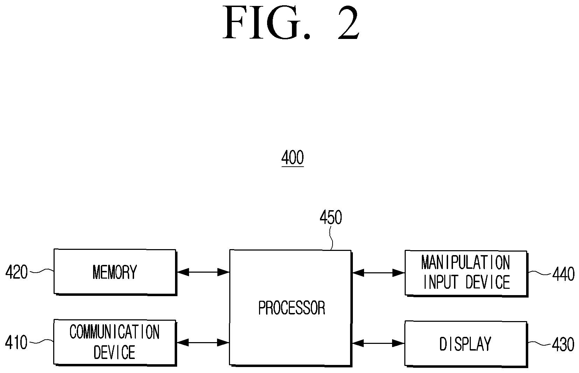

FIG. 2 is a block diagram showing a configuration of a computing device according to an embodiment of the present disclosure.

In detail, in the system shown in FIG. 1, not only the apparatus that performs the homomorphic encryption, such as the first electronic apparatus or the second electronic apparatus, but also the device that operates the homomorphic ciphertext, such as the first server device, or the device that decrypts the homomorphic ciphertext, such as the second server device, may be referred to as the electronic apparatus. Such an electronic apparatus may be any of various devices such as a personal computer (PC), a laptop, a smartphone, a tablet, or a server.

Referring to FIG. 2, an electronic apparatus 400 may include a communication device 410, a memory 420, a display 430, a manipulation input device 440, and a processor 450.

Meanwhile, the electronic apparatus 400 may have a machine word size of N bits. Here, the machine word size may indicate the number of bits of data that the processor 450 may process at a single time. Here, the machine word size may be related to the number of bits in a hardware architecture of the electronic apparatus 400. As an example, the machine word size may be related to the size of the registers, the size of an address bus, the size of a data bus, or the like.

In one or more embodiments, the electronic apparatus 400 may have a 32-bit or 64-bit hardware architecture. Here, the electronic apparatus 100 having the 32-bit hardware architecture may generally have a 32-bit machine word size, which is only an embodiment, and may have a machine word size of less than or equal to 32 bits (e.g., 16 bits or 8 bits) depending on the specific operation. In addition, the electronic apparatus 100 having the 64-bit hardware architecture may generally have a 64-bit machine word size, which is only an embodiment, and may have a machine word size of less than or equal to 64 bits (e.g., 32 bits, 16 bits, or 8 bits) depending on the specific operation.

Meanwhile, according to an embodiment of the present disclosure, the electronic apparatus 100 may have the 64-bit word size.

The communication device 410 may connect the electronic apparatus 400 to the external device (not shown), and may be connected to the external device not only via a Local Area Network (LAN) and the Internet, but also via a Universal Serial Bus (USB) port or a wireless communication port (e.g., Wi-Fi 802.11a/b/g/n, NFC, or Bluetooth). The communication device 410 may also be referred to as a transceiver.

The communication device 410 may receive a public key from the external device, and transmit the public key generated by the electronic apparatus 400 itself to the external device.

In addition, the communication device 410 may receive the message from the external device, and transmit the generated homomorphic ciphertext to the external device.

In addition, the communication device 410 may receive various parameters required for generating the ciphertext from the external device. Meanwhile, in implementation, the various parameters may be directly input from the user through the manipulation input device 440 described below.

In addition, the communication device 410 may receive a request for the operation on the homomorphic ciphertext from the external device and transmit its computed result to the external device. Here, the communication device 410 may receive the homomorphic ciphertext having a M * N-bit word size from the external device. For example, the communication device 410 may receive the homomorphic ciphertext having the 64-bit word size from the external device.

The memory 420 is a component for storing an operation system (O/S) for operating the electronic apparatus 400, various software, data, or the like. The memory 420 may be implemented in any of various forms such as a Random-Access Memory (RAM), a Read-Only Memory (ROM), a flash memory, a hard disk drive (HDD), an external memory, or a memory card, and is not limited to any one thereof.

The memory 420 may store the message to be encrypted. Here, the message may include various credit information, personal information, or the like quoted by the user, and may also be information related to a usage history, such as location information, internet usage time information, or the like used by the electronic apparatus 400.

In addition, the memory 420 may store the public key. If the electronic apparatus 400 is a device that directly generates the public key, the electronic apparatus 400 may store not only the secret key, but also various parameters required for generating the public key and the secret key.

In addition, the memory 420 may store the homomorphic ciphertext generated in a process described below. In addition, the memory 420 may also store the homomorphic ciphertext transmitted from the external device. In addition, the memory 420 may also store the operation result ciphertext, which is a result of an operation process described below.

In addition, the memory 420 may store the scaling factor for performing the operation on the homomorphic ciphertext. Here, the scaling factor may be one of values used to convert the homomorphic ciphertext to plaintext. In addition, homomorphic encryption may perform computations on the homomorphic ciphertext, and the scaling factor may be one of important parameters used to perform mathematical operations on the message in its homomorphic ciphertext state. Here, the scaling factor may be referred to by any of various terms such as the parameter.

The display 430 may display a user interface window for selection of functions supported by the electronic apparatus 400. In detail, the display 430 may display the user interface window for the selection of various functions provided by the electronic apparatus 400. The display 430 may be a monitor such as a liquid crystal display (LCD), or an organic light-emitting diode (OLED) display, and may also be implemented as a touchscreen capable of simultaneously performing a function of the manipulation input device 440 described below.

The display 430 may display a message requesting input of the parameter required for generating the secret key or the public key. In addition, the display 430 may display a message for selecting a message as an encryption target. Meanwhile, in implementation, the encryption target may be selected directly by the user or automatically selected. That is, the personal information or the like to be encrypted may be set automatically even if the user does not directly select the message.

The manipulation input device 440 may receive a function selection command and a control command for a corresponding function of the electronic apparatus 400 from the user. In detail, the manipulation input device 440 may receive the parameter required for generating the secret key or the public key from the user. In addition, the manipulation input device 440 may receive the message to be encrypted from the user.

The processor 450 may control each component included in the electronic apparatus 400. The processor 450 may be configured as a single device, such as a central processing unit (CPU) or an application-specific integrated circuit (ASIC), or may be configured as a plurality of devices, such as central processing units (CPUs) and graphics processing units (GPUs).

Here, the processor 450 may have the machine word size that may process 64 bits of data at a single time.

The processor 450 may store the message to be transmitted in the memory 420 if the corresponding message is input. The processor 450 may homomorphically encrypt the message by using various set values and programs stored in the memory 420. In this case, the public key may be used.

The processor 450 may generate and use the public key required to perform the encryption on its own, or may receive the public key from the external device and use the same. As an example, the second server device 300 performing the decryption may distribute the public key to other devices.

If the processor 450 generates the key on its own, the processor 450 may generate the public key by using a Ring-Learning With Errors (Ring-LWE) scheme. To describe in detail, the processor 450 may first set the various parameters and rings and store the same in the memory 420. An example of the parameter may include a length of plaintext message bits, a size of the public key or the secret key, or the like.

The ring may be expressed by the following equation.

[Equation 2]

$$R = Z_q[X]/f(x)$$

Here, R indicates the ring, $Z_q$ indicates a coefficient, and f(x) indicates an Nth polynomial.

The Ring indicates a set of polynomials having predetermined coefficients, and indicates a set in which addition and multiplication are defined between elements and which is closed under the addition and multiplication. The Ring may be referred to as the ring.

As an example, the ring indicates a set of the Nth polynomials having the coefficient $Z_q$. In detail, if n is $\Phi(N)$, N indicates a polynomial which may be calculated as the remainder of dividing the polynomial by an Nth cyclotomic polynomial. (f(x)) indicates ideal of $Z_4[x]$ generated by f(x). The Euler totient function $\Phi(N)$ indicates the number of natural numbers coprime to N and smaller than N. If $\Phi N(x)$ is defined by the Nth cyclotomic polynomial, the ring may also be expressed by Equation 3 below.

[Equation 3]

$$R = Z_q[X]^{\cdot}\Phi_M(x)$$

A secret key sk may be expressed as follows.

Meanwhile, the ring in Equation 3 described above has complex numbers in a plaintext space. Meanwhile, only a set whose plaintext space consists of real numbers among the sets of rings described above may be used to improve an operational speed of the homomorphic ciphertext.

If the ring is set up, the processor 450 may calculate the secret key sk from the ring.

[Equation 4]

$$sk \leftarrow (1, s(x)), \; s(x) \in R$$

Here, s(x) indicates a random polynomial generated using a small coefficient.

In addition, the processor 450 may calculate a first random polynomial a(x) from the ring. The first random polynomial may be expressed as follows.

[Equation 5]

$$a(x) \leftarrow R$$

In addition, the processor 450 may calculate the error. In detail, the processor 450 may extract the error from a discrete Gaussian distribution or a distribution having a statistical distance close thereto. This error may be expressed as follows.

[Equation 6]

$$e(x) \leftarrow D^n_{\alpha q}$$

If even the error is calculated, the processor 450 may calculate a second random polynomial by performing the modulus operation on the error in the first random polynomial and the secret key. The second random polynomial may be expressed as follows.

[Equation 7]

$$b(x) = -a(x)s(x) + e(x)(mod \; q)$$

Finally, a public key pk may be set up to include the first random polynomial and the second random polynomial as follows.

[Equation 8]

$$pk = (b(x), \; a(x))$$

The above-described key generation method is only an example, the present disclosure is not necessarily limited thereto, and the public key and the secret key may also be generated using another method.

Meanwhile, the processor 450 may control the communication device 410 to transmit the public key to other devices if the public key is generated.

In addition, the processor 450 may generate the homomorphic ciphertext for the message. In detail, the processor 450 may generate the homomorphic ciphertext by applying the previously generated public key to the message. Here, the processor 450 may generate the ciphertext to have a length corresponding to a size of the scaling factor Δ.

In addition, the processor 450 may store the homomorphic ciphertext in the memory 420 if the homomorphic ciphertext is generated, or control the communication device 410 to transmit the homomorphic ciphertext to another device based on a user request or a predetermined default command.

Meanwhile, according to an embodiment of the present disclosure, packing may be performed. If the packing is used in the homomorphic encryption, the plurality of messages may be encrypted as a single ciphertext. In this case, if the electronic apparatus 400 performs the operations between the respective ciphertexts, the operations on the plurality of messages may be processed in parallel as a result, thereby greatly reducing an operation burden.

In detail, if the message includes a plurality of message vectors, the processor 450 may also convert the plurality of message vectors into a polynomial that may be encrypted in parallel, then multiply the polynomial by the scaling factor, and use the public key to homomorphically encrypt the same. Accordingly, the processor 450 may generate the ciphertext in which the plurality of message vectors are packed.

In addition, if the homomorphic ciphertext is required to be decrypted, the processor 450 may apply the secret key to the homomorphic ciphertext to thus generate a polynomial-shaped decrypted text, and decode the polynomial-shaped decrypted text to thus generate the message. Here, the generated message may include the error as mentioned in Equation 1 described above.

In addition, the processor 450 may perform the operation on the ciphertext. In detail, the processor 450 may perform the operation such as addition or multiplication on the homomorphic ciphertext while maintaining its encrypted state. In detail, the processor 450 may process each of the homomorphic ciphertexts to be used in the operation by using a first function, perform the operation such as the addition or multiplication between the homomorphic ciphertexts processed using the first function, and process the homomorphic ciphertexts, on which the operation is performed, by using a second function, which is an inverse function of the first function. These first-function processing and second-function processing may utilize a linear transformation technique in a bootstrapping process described below.

Meanwhile, the electronic apparatus 400 may detect the data in the effective region from operation result data if the operation is completed. In detail, the electronic apparatus 400 may perform rounding processing on the operation result data to detect the data in the effective region. The rounding processing indicates rounding off of the message while the message is encrypted, and may also be referred to as the rescaling. In detail, the electronic apparatus 400 may remove a noise region by multiplying each component of the ciphertext by $\Delta^{-1}$, which is an inverse of the scaling factor, and rounding off the same. The noise region may be determined to correspond to the size of the scaling factor. As a result, the electronic apparatus 400 may detect the message in the effective region excluding the noise region. The rounding processing may be performed while the message is encrypted, an additional error may thus occur. However, a size of the error may be sufficiently small and thus ignored.

In addition, the electronic apparatus 400 may perform a bootstrapping operation on the ciphertext if an approximate message weight in the operation result ciphertext exceeds a threshold. In detail, the electronic apparatus 400 may generate the homomorphic ciphertext whose plaintext space is expanded by expanding a modulus of the operation result ciphertext, performing a first linear transformation on the homomorphic ciphertext whose modulus is expanded into a polynomial form, performing an approximate arithmetic on a first homomorphic ciphertext, which is converted into the polynomial form, by using a function set to approximate a modulated range of the plaintext, performing a second linear transformation on a second homomorphic ciphertext, on which the approximate arithmetic is performed, into a form of the homomorphic ciphertext, and performing a subtraction operation by subtracting the second homomorphic ciphertext, on which the second linear transformation is performed, from the homomorphic ciphertext whose modulus is expanded.

As described above, the electronic apparatus 400 may utilize the scaling factor $\Delta$ in a process of encrypting the plaintext message into the homomorphic ciphertext or in a process of operating the homomorphic ciphertext.

Meanwhile, in an embodiment of the present disclosure, a relationship between the ciphertext modulus and the scaling factor may be separated. In particular, this separation may be designed to maintain the same number of switching keys while making the most of the computation and memory budget of the electronic apparatus 400 by using the RNS moduli that include the plurality of moduli each corresponding to the machine word size.

According to an embodiment of the present disclosure, the electronic apparatus 400 may acquire the homomorphic ciphertext by using the Residue Number System (RNS) modulus including the plurality of moduli each having a size corresponding to the word size of the processor 450. Here, the RNS modulus may be a value that defines an entire modulus space used in the operation of homomorphic encryption/the homomorphic encryption operation, and as described below, a RNS modulus Q may usually be expressed as a product of the plurality of moduli $q_1$, $q_2$, ..., and $q_k$.

[Equation 9]

$$Q = q_1 \cdot q_2 \cdot \ldots \cdot q_k$$

According to an embodiment of the present disclosure, all operations may be performed in a Residue Number System (RNS) format within Cheon-Kim-Kim-Song (CKKS, RNS-CKKS). That is, all the homomorphic ciphertexts or keys may be decomposed using the RNS moduli, and each component may be computed based on the machine word size. Therefore, if the number of RNS components representing the homomorphic ciphertext may be reduced, the overall Fully Homomorphic Encryption (FHE) computation may be directly speeded up by the reduction ratio based on the ciphertext modulus. In particular, the number of operations such as (i) Number Theoretic Transform (NTT), Fast Basis Conversion (FBC), tensor operations, and external products may follow an approximate reduction ratio even after considering an additional cost. The FBC, tensor multiplication, and external products may be reduced by the same ratio. In particular, in an embodiment of the present disclosure, the plurality of moduli may use primes (word size primes) each corresponding to the machine word size. However, this configuration may limit available multiplicative depth compared to a case where a modulus value is set to be approximately equal to the scaling factor, i.e., $\Delta$. The scaling factor $\Delta$ may typically vary between 20 and 120 depending on message precision (or target message precision).

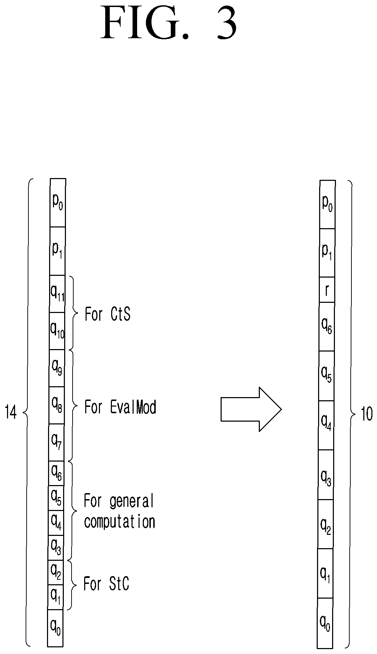

FIG. 3 is a diagram showing a conventional RNS modulus and a modulus according to an embodiment of the present disclosure.

A conventional RNS modulus 310 may be composed of 14 moduli. Here, the plurality of moduli may have a plurality of sizes to perform various operations. For example, the plurality of moduli may include moduli for scaling the ciphertext (For CtS), moduli for evaluating the operations on the ciphertext (Kor EvalMod), moduli for general operations (For general computation), and moduli for converting the ciphertext (For StC). The conventional RNS modulus 310 may be composed of many moduli, and accordingly, there may be limitations in the size and complexity of the computation, which are relatively large and slow.

An RNS modulus 320 according to an embodiment of the present disclosure may include the plurality of moduli each corresponding to the machine word size. As an example, the RNS modulus 320 according to an embodiment of the present disclosure may be composed of 10 moduli, which is a smaller number than the conventional RNS modulus 310. In particular, if a size of the moduli corresponds to the machine word size (e.g., 64 bits), hardware efficiency may be maximized, thus enabling the faster operation (e.g., 1.4 times).

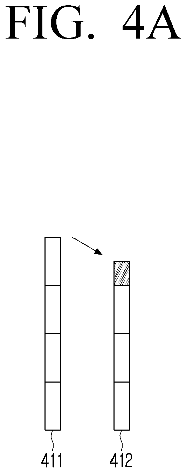

In an embodiment of the present disclosure, a method may be used to rescale the plurality of moduli by a smaller scaling factor while using primes each corresponding to the machine word size. To this end, according to an embodiment of the present disclosure, the electronic apparatus 100 may perform the operation on the homomorphic ciphertext by using the rational rescaling. That is, the electronic apparatus 100 may use the rational rescaling, which is a tool to switch the ciphertext modulus into a non-divisor modulus. Here, the rational rescaling may refer to rescaling in which Q' does not necessarily have to be a value divisible by Q if the modulus Q is rescaled to Q'. As an example, as shown in FIG. 4A, the rational-scaling factor $\Delta$ may be used if a modulus Q 411 is scaled to a modulus Q' 412.

A rational rescaling procedure may rescale the input ciphertext by a rational number $Q/Q' \in \mathbb{Q}$, in the modulus Q, to convert the output ciphertext into modulus $Q/(Q/Q') = Q'$, and may also rescale the scaling factor.

For given polynomials $a \in R_Q$ and $Q'|Q$, the rational rescaling is defined as the rescaling by a rational coefficient $Q'/Q$, which may be computed by Equation 10 below.

[Equation 10]

$$\mathrm{RS}_{Q/Q'}(\mathbf{a}) = \mathrm{RS}_S(\mathsf{Inv\text{-}RS}_R(\mathbf{a}) \in \mathcal{R}_{\mathrm{lcm}(Q,Q')}) \in \mathcal{R}_{Q'}$$

Here, $R = \mathrm{lcm}(Q,Q')/Q \in \mathbb{Z}$ , $S = \mathrm{lcm}(Q,Q')/Q' \in \mathbb{Z}$ , and lcm indicates the least common multiple.

An RS symbol may represent both the rational rescaling and integer rescaling (i.e., conventional rescaling by integers). The rational rescaling may be seamlessly extended to polynomials or ciphertext vectors.

It needs to be noted that inverse rescaling during the rational rescaling serves a completely different function from that performed during the key switching.

Theorem 1 below shows that a rational rescaling error is of the same format as those of modulus reduction (ModDown) and rescaling (RS) errors, and that the rational rescaling error is proportional to the number of RNS moduli removed. Therefore, it is important to minimize a RNS modulus factor of lcm(Q,Q')/Q' to reduce the error.

[Theorem 1] (Accuracy of Rational Rescaling and Rational Rescale Correctness)

For given ciphertexts $\mathrm{ct} \in R_Q^2$ and $Q'|Q$, $[\langle \mathrm{RS}_{Q/Q}(\mathrm{ct}),\mathrm{sk}\rangle]_{Q'} = Q'/Q \cdot [\langle \mathrm{ct},\mathrm{sk}\rangle]_Q + e_{res}$ may be satisfied.

Here, $e_{res}$ may be a rescaling error satisfying the following condition.

$$\|e_{\text{res}}\|_{\infty} \leq \frac{\ell}{2} \cdot (\|s\|_1 + 1)$$

Here, I indicates the number of RNS blocks included in $\text{lcm}(Q,Q')/Q'$, and S indicates the secret key.

Theorem 1 shows that the rational rescaling maintains its accuracy, and the error $e_{\text{res}}$ is constrained in proportion to I, a size of the secret key $\|s\|_1$ and a predetermined value.

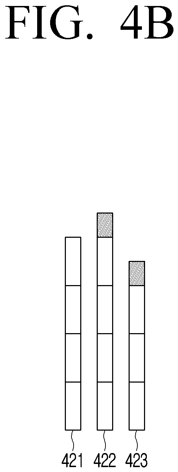

FIG. 4B is a diagram for describing the rational rescaling according to an embodiment of the present disclosure.

First, an initial modulus 421 may be $(ct; \Delta^2)$ mod Q. Here, ct indicates the ciphertext and $\Delta^2$ indicates a scaling factor. An intermediate modulus 422 may be acquired by multiplying the initial modulus 421 by R. Here, R may be $\text{lcm}(Q, Q')/Q$. The intermediate modulus 422 may be $(R \cdot ct; R\Delta^2)$ mod $\text{lcm}(Q, Q')$. A final modulus 423 may be acquired by dividing the intermediate modulus 422 by R'. Here, R' may be $\text{lcm}(Q,Q')/Q'$. The final modulus 423 may be $(ct'; \Delta' := R\Delta^2/R')$ mod Q'.

That is, the rational rescaling is a technique for rescaling the modulus of the ciphertext from Q to Q' by using the rational numbers, and in this process, the accuracy and efficiency of the ciphertext operation may be improved by utilizing $\text{lcm}(Q,Q')$ based on the least common multiple.

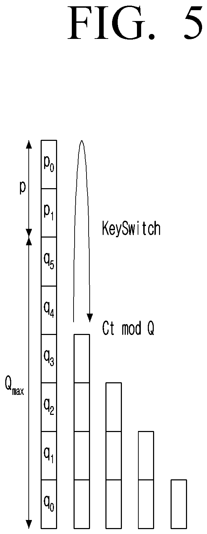

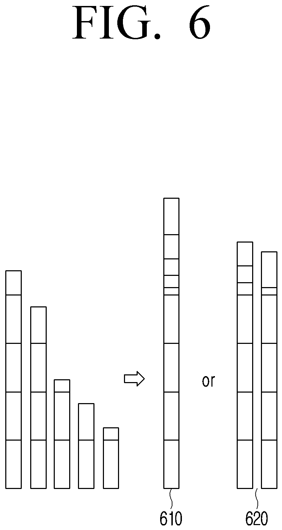

FIGS. 5 and 6 are diagrams for describing a conventional key switching operation. The key switching operation is a technique for converting the ciphertext by using another secret key, and is one of the important operations in the homomorphic encryption (HE).

A modulus of the ciphertext ct is defined as Q, and a switching key swk may be defined as mod $Q_{swk} = PQ$.

As shown in FIG. 5, the key switching operation includes the following processes: 1) modulus expansion (ModUp), 2) tensor operation, and 3) modulus reduction (ModDown). 1) Modulus expansion (ModUp) is a process of expanding the original ciphertext modulus Q to a larger modulus of mod $Q_{swk} = PQ$. The extended ciphertext may perform more the operations by including information of an added dimension. 2) Tensor operation may apply the tensor operation using the switching key to the extended ciphertext. Accordingly, a process of applying a new key may be performed. 3) Modulus reduction (ModDown) may again reduce the ciphertext modulus Q, thereby finally acquiring the ciphertext in which the key is switched.

Meanwhile, the rational rescaling is a process of converting the ciphertext including the message after the tensor operation on the scaling factor from $\Delta^2$ to $\Delta^2 \cdot Q'/Q \approx \Delta$. This method is different from an existing method $\Delta^2/q_{\ell} \approx \Delta$. In particular, if the scaling factor is adjusted by utilizing the rational rescaling, the resulting ciphertext modulus Q may not be a divisor of a switching key modulus $PQ$. In this case, an existing key switching procedure is unable to be applied because the modulus of the ciphertext is modified, which may not be compatible with an existing gadget decomposition method.

Q needs to be a divisor of $Q_{swk}$ to perform the key switching. However, more moduli may be needed to cover all the possible moduli Q. This need may result in a limit to an increase in the moduli. In detail, as shown in 610 of FIG. 6, a setting Q $|Q_{swk}$ may be defined to hold for all the possible Q, in which case, moduli of various sizes are required. As shown in 620 of FIG. 6, a plurality of key sets may be used. However, in this case, the number of switching keys may be increased, and a communication cost may be increased if the keys are transmitted. If a specific circuit is not predetermined, a very large number of keys need to be transmitted for general circuit evaluation, which is inefficient. In addition, in Fully Homomorphic Encryption (FHE), a size of the switching key may range from hundreds of megabytes (MB) to several gigabytes (GB), and preparing the plurality of keys may be burdensome.

According to an embodiment of the present disclosure, to address the above-described issue, the processor 450 may perform the key switching operation by using the intermediate modulus.

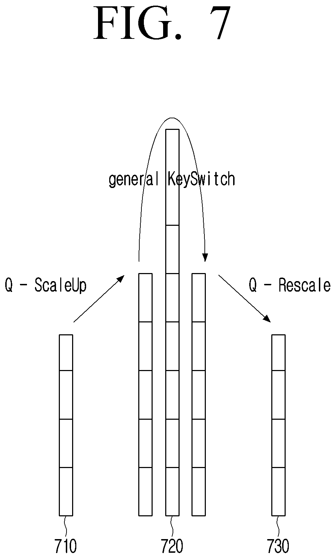

FIG. 7 is a diagram for describing a process of performing the key switching operation by using the intermediate modulus according to an embodiment of the present disclosure.

First, the processor 450 may upscale an RNS modulus 710 to generate an intermediate modulus 720. Here, the intermediate modulus may be a divisor of the switching key modulus. In addition, the processor 450 may perform the key switching operation on the intermediate modulus 720. In addition, the processor 450 may perform the rescaling on the intermediate modulus 420 on which the key switching operation is performed to acquire an output modulus 730.

In detail, given the ciphertext acquired by encrypting the message $\Delta m+e$ in modulus Q, the intermediate modulus $Q_{int}$ is $Q_{int} \gtrsim Q$, and one of moduli satisfying $Q_{int} | PQ$ may be selected. In addition, the modulus of the ciphertext may be converted into the intermediate modulus $Q_{int}$, and then the key switching may be performed thereon. This process is similar to the rational rescaling, which may be operated by first converting the ciphertext into the intermediate modulus and then applying the key switching thereto.

The ciphertext converted as a result of the key switching may be encrypted using a new secret key, and the message may be adjusted as in Formula 11 below.

[Formula 11]

$$\left(\frac{Q_{\text{int}}}{Q}\right) \cdot (\Delta m + e) + e'$$

Here, e' indicates an error that occurs during rescaling and key switching processes.

In addition, the processor 450 may perform the rescaling process to switch the modulus back to the output modulus Q. In this process, the error may be maintained within an original error value and a rescaled error range.

Extending the above method, the switching key may be prepared in modulus $Q_{\text{swk}}$, which is mostly composed of the moduli having the machine word size. Depending on the scaling factor, the rational rescaling may be performed on the ciphertext modulus from $Q$ to $Q' \approx Q/\Delta$, and during this process, the modulus of the ciphertext may be temporarily converted into $Q_{\text{int}} \mid Q_{\text{swk}}$ to perform the key switching.

Meanwhile, a process of temporarily converting the modulus Q to the intermediate modulus $Q_{\text{int}}$ may cause an additional NTT operation. This problem may also occur even in case of coupling this process with the ModUp operation. In detail, the ModUp operation may require the same number of NTT operations for coefficient input and NTT-evaluated format input. The reason is that although some NTT-evaluated inputs may be reused, maintaining the result in an NTT-evaluated state still requires the same operations. Therefore, performing the temporary modulus switching requires additional (f+1) NTT operations, where $\ell+1$ may indicate the number of moduli included in the modulus Q.

In addition, the temporary modulus switching and the rational rescaling may incur an additional Hadamard multiplication cost. This cost may be quite large, especially if the factors of the two moduli do not overlap much.

In detail, assuming that the number of factors of Q is $\ell = \ell_1 + \ell_2$ and the number of factors of $Q_{\text{int}}$ is $\ell' = \ell_2 + \ell_3$, then exactly $l_2$ factors may overlap. In this case, a cost incurred by the conversion from Q to $Q_{\text{int}}$ may be increased as shown in Formula 12 below.

[Formula 12]

$$O\left(N\left(\ell + (\ell - \ell_2) \cdot \ell'\right)\right)$$

Here, n indicates a ring dimension.

In an embodiment of the present disclosure, the processor 450 may perform a modulus resurrection technique to avoid generating more switching keys or incurring additional key switching costs. In detail, this method may be a way to reuse some factors of the ciphertext modulus. A basic condition of the moduli included in the RNS modulus is that these moduli need to be relatively prime. While satisfying this condition, the processor 450 may resurrect and reuse some elements of the top ciphertext modulus previously scaled and then lost. In this way, the plurality of moduli included in the RNS modulus may still maintain a prime relationship with each other, while the ciphertext modulus may be maintained as the divisor of the switching key modulus. This method may be a method of fusing the temporary ciphertext modulus chain described above with an existing ciphertext modulus chain.

In an embodiment of the present disclosure, a part of the ciphertext modulus that is specifically resurrected may be referred to as the sprout modulus. The sprout modulus may be flexible and have a small size. For all possible sprouts, the present disclosure defines their common multiple, which may be referred to as a top sprout $r_{\text{top}}$. That is, the present disclosure may set the sprout $r_{\text{top}}$ having the maximum size and select the sprout modulus from divisors of the sprout having the maximum size. Each ciphertext modulus may be expressed as a product of the sprout modulus and different word-sized NTT primes, i.e., unit moduli. Accordingly, the ciphertext modulus including the sprout modulus may be referred to as a grafted modulus.

In detail, the plurality of moduli included in the RNS modulus according to an embodiment of the present disclosure may include the sprout modulus composed of a product of primes whose size is less than or equal to the machine word size. That is, the RNS modulus Q may be expressed by Equation 13 below.

[Equation 13]

$$Q = q_0 \times \ldots \times q_l \times r$$

Here, $q_0$ to $q_1$ indicate the plurality of moduli each having the size corresponding to the machine word size, and r indicates the sprout modulus. For example, if the plurality of moduli are 60-bit primes, r may be expressed as one 30- to 59-bit prime or one 30-bit prime x one 31- to 59-bit prime, depending on its size. In addition, for any 60k+s bit modulus Q, the sprout modulus r may be k 60-bit primes if s=0, may be expressed as k-1 60-bit primes, one 30-bit prime, and one (s+30)-bit prime if ($1 \leq s \leq 29$), and may be expressed as a product of k 60-bit primes and one s-bit prime if ($30 \leq s \leq 59$).

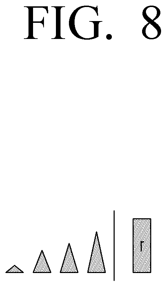

According to an embodiment of the present disclosure, the sprout modulus may be designed to be used flexibly by separating a specific part, as shown in FIG. 8. For example, the sprout modulus may be expressed by Equation 14 below.

[Equation 13]

$$r = r_1 \cdot r_2 \cdot r_3$$

Here, each of $r_1$, $r_2$, and $r_3$ may be a 20-bit NTT prime. This structure may make $Q \equiv 0, 20, 40 \bmod 60$ possible. That is, this structure may make an operation possible where the remainder is set to a specific value (0, 20, 40). Here, $q_i$ may be $2^{60}$.

As another example, if the sprout modulus is expressed as $r = 2^{60}$ and $q_i$ is $2^{60}$, the modulus Q may be freely selected to any bit. That is, a remainder operation in a binary mode may be made possible.

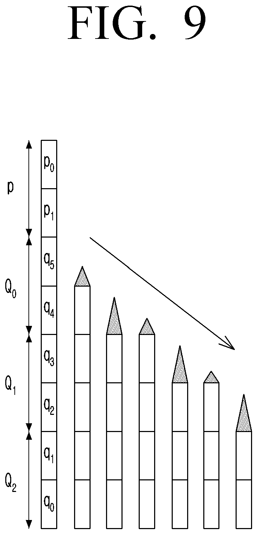

FIG. 9 is a diagram showing a scenario in which the modulus including the sprout modulus is reduced according to an embodiment of the present disclosure. According to an embodiment of the present disclosure, each multiplication operation may progressively consume the moduli by the scaling factor while maintaining as many machine-sized moduli as possible. In addition, the number of non-empty gadget blocks in an entire process may be optimized.

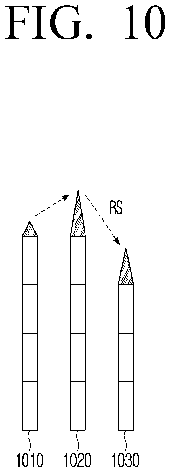

In addition, the processor 450 may generate the intermediate modulus by resurrecting the sprout modulus and acquire the output modulus by rescaling the intermediate modulus. Here, the intermediate modulus may be a multiple of the output modulus. In detail, as shown in FIG. 10, a sprout modulus part (triangular part) included in an input modulus 1010 may be resurrected to generate an intermediate modulus 1020. In addition, the intermediate modulus 1020 may be adjusted to be a multiple of an output modulus 1030. In this way, the processor 450 may perform the rescaling using an existing method. For example, if the sprout modulus is $r = r_1 \cdot r_2 \cdot r_3$, and each of $r_1$, $r_2$, and $r_3$ are the 20-bit NTT primes, the input modulus 1010 may be $q_0 q_1 q_2 q_3 r_1$ and the scaling target may be $2^{40}$. The input modulus 1010 may be $q_0 q_1 q_2 q_3 r_1 \approx 2^{260}$, and the processor 450 may multiply the input modulus 1010 by $r_2$ to generate $q_0 q_1 q_2 q_3 r_1 r_2 \approx 2^{280}$, which is the intermediate modulus 1020. In addition, the processor 450 may acquire $q_0 q_1 q_2 r_1 r_2 \approx 2^{220}$, which is the output modulus 1030, by dividing the intermediate modulus 1020 by $q_3$ to adjust (rescale) the modulus. In this way, flexible rescaling may be possible while maintaining the modulus having the machine word size.

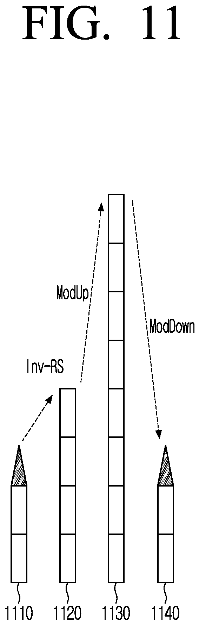

According to an embodiment of the present disclosure, the processor 450 may perform the key switching operation on the homomorphic ciphertext by using the sprout modulus. In one or more embodiments, the processor 450 may perform the key switching operation by using the sprout modulus through the process shown in FIG. 11. In detail, the processor 450 may acquire an intermediate modulus 1120 by performing inverse rational rescaling (i.e., inverse conversion of the rational rescaling) on an input modulus 1110. In addition, the processor 450 may acquire an expanded modulus 1130 by performing the ModUp operation on the intermediate modulus 1120. In addition, the processor 450 may perform the key switching operation on the expanded modulus 1130 and then perform the ModDown operation to thus acquire an output modulus 1140. Through this process, unnecessary operations may be reduced while performing the key switching, and efficiency may be increased by utilizing an existing sprout modulus.

To describe the present disclosure in more detail, the maximum ciphertext modulus may be defined as $Q_{max} = q_0 \cdots q_{L-1} \cdot r_{top}$, where $q_i$'s may be the unit modulus having a size similar to a machine word size ($w=2^w$). In addition, each ciphertext modulus Q may be expressed as $Q = q0 \cdots q_{\ell-1} \cdot r$ including some of the sprout moduli r. The switching key modulus may be expressed as $PQ_{max}$, where P may generally be set to $P = p_0 \cdots p_{K-1}$. Here, the respective $p_i$ are the unit moduli which are coprime and satisfy $\gcd(P, Q_{max}) = 1$, and P and $Q_{max}$ may thus satisfy their coprime relationship. Each sprout modulus r is the divisor of the top sprout modulus $r_{top}$, and thus may satisfy $r \mid r_{top}$. This allows the following Formula 14 to be established.

[Formula 14]

$$Q \mid Q_{max} \mid PQ_{max}$$

Therefore, the key switching operation may be performed using the same number of switching keys as the key switching using the existing method. In particular, the sprout modulus $r_{top}$ having the maximum size may be selected to be a size similar to the machine word size $w=2^w$. Below is an example of a sprout modulus.

(Example 1) Assuming that the unit moduli $q_i$'s are 60-bit NTT primes and the top sprout modulus is defined as $r_{top}$

= $r_0 \cdot r_1$. Here, each of $r_0$ and $r_1$ may be a 30-bit NTT prime.

Each sprout modulus r may be expressed as $r \in \{1, r_0, r_0r_1\}$. Here, $r_0r_1$ may only appear in a maximum modulus $Q_{max}$.

If the scaling is performed in modulus $Q = q_0 \cdots q_{\ell-1} \cdot r$, the scaling may be continuously performed in units of approximately 30 bits. For example, if r includes $r_i$, the rescaling may be performed using $r_i$, and if r = 1, the rational rescaling may be performed using $q_\ell/r_1 \approx 2^{30}$.

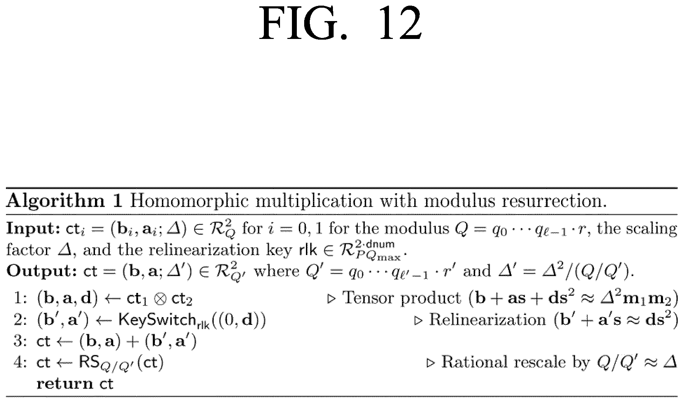

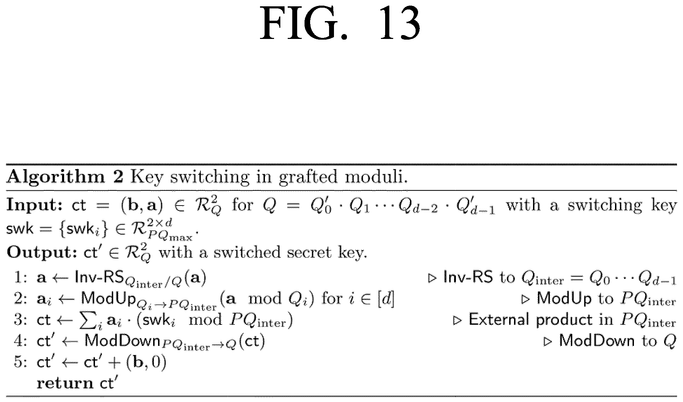

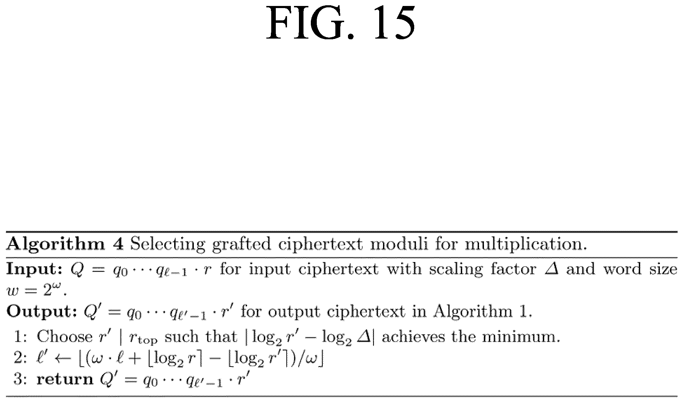

A multiplication algorithm resulting from this process may be specified in Algorithm 1 as shown in FIG. 12. According to an embodiment of the present disclosure, there are two major differences compared to an existing RNS-CKKS multiplication scheme. The first difference is that the ciphertext modulus is modified to the grafted modulus including the sprout modulus, and the second difference is that the rescaling is replaced with the rational rescaling using the existing method, which may be converted into the appropriate modulus Q'. Therefore, in the present disclosure, only a small number of unit moduli may be removed in a rational rescaling process, and the size of the error may be maintained at almost the same level as the error that occurs in an existing rescaling method. A detailed key switching procedure may refer Algorithm 2 shown in FIG. 13, and a method of selecting the output modulus Q' may refer Algorithm 4 shown in FIG. 15.

The output ciphertext modulus Q' needs to be approximately Q/Δ to maintain the scaling factor Δ. Therefore, the sprout modulus that is generally selected may vary depending on a rescaling factor to be used. For example, the sprouts used in the above example may be designed to only allow the rescaling in multiples of ω/2=30 bits. This configuration may result in limiting the scaling factor that may be used in case of evaluating a circuit. Therefore, it is important to select the sprout modulus that is appropriate for the given circuit. The present disclosure describes below in detail a universal sprout, which is general and may be used for general purposes.

The processor 450 may perform the key switching by using the sprout modulus.

In particular, the key switching procedure and a relinearization procedure may be performed in the same manner as an existing non-grafted RNS-CKKS scheme. The reason is that all the ciphertext moduli Q are maintained as divisors of a switching key modulus $PQ_{max}$. In the present disclosure, the maximum ciphertext modulus $Q_{max}$ may be decomposed into $d_{num}$ blocks, each having a similar size, such as $Q_0$, ..., and $Q_{dnum-1}$. These blocks may be referred to as gadget blocks, and here be set to satisfy $P \gtrsim \max_i Q_i$.

The sprout modulus may be disposed in a single gadget block. In addition, efficiency of the key switching may vary depending on the gadget decomposition method. For example, the sprout modulus may be disposed in the top gadget block $Q_{dnum-1}$. If conditions $\alpha i \le \ell < \alpha(i+1) - 1$ and $i < \mathbf{dnum} - 1$ are satisfied, the number of gadgets for a ciphertext modulus $Q = r \cdot q_0q_1 \cdots q_{\ell-1}$ may be greater than the optimal value of $d = \lceil (\ell + 1)/\alpha \rceil$. Rearranging these conditions may be as shown in Equation 15 below.

[Equation 15]

$$Q = q_0q_1 \cdots q_{\ell-1} \cdot r = (q_0 \cdots q_{\alpha-1}) \cdots (q_{\alpha(d-1)} \cdots q_{\ell-1}) \cdot r$$
$$= Q_0 \cdots Q'_{d-1} \cdot Q'_{\mathsf{dnum}-1},$$

Here, $Q'_{d-1}$ indicates a divisor of $Q_{d-1}$, and may satisfy $Q'_{d_{num}-1} = r$. The number of gadget blocks in the ciphertext modulus may directly affect the key switching costs. This effect may be increased almost linearly relative to the number of gadget blocks. In the above case, the gadget block $Q_{d_{num}-1}$ may only be used to include the sprout modulus. Therefore, a total number of blocks used may be increased from an existing d to d+1. As a result, a key switching speed may be slowed by approximately (d+1)/d times. In particular, if the modulus Q is small, this ratio may become large to be non-negligible.

To achieve the optimal efficiency, the sprout modulus may be disposed at the bottom gadget block to minimize the number of non-empty gadget blocks. This process may be performed as shown in Equation 16 below.

[Equation 16]

$$Q_0 = r_{\mathrm{top}} \cdot q_0 \cdots q_{\alpha-2},$$
$$Q_i = q_{\alpha i-1}q_{\alpha i} \cdots q_{\alpha(i+1)-2} \text{ for } 1 \le i \le \mathsf{dnum} - 1$$

Here, $L + 1 = \text{dnum} \cdot \alpha$.

A grafted ciphertext modulus including the sprout modulus may be expressed by Equation 17 as follows.

[Equation 17]

$$Q = r \cdot q_0 q_1 \cdots q_{\ell-1} = (r \cdot q_0 \cdots q_{\alpha-2}) \cdot (q_{\alpha-1} \cdots q_{2\alpha-2}) \cdots (q_{\alpha(d-1)-1} \cdots q_{\ell-1})$$
$$= Q_0' \cdot Q_1 \cdots Q_{d-2} \cdot Q_{d-1}',$$

Here, $1 \leq \ell \leq L$, $Q_0'$ indicates a divisor of $Q'$, $Q_{d-1}'$ indicates a divisor of $Q_{d-1}$, and $d = |(\ell+1)/\alpha|$. This condition may minimize the number of gadgets for each ciphertext modulus Q.

The key switching procedure, which follows the key switching procedure of the existing RNS-CKKS and applies the grafted ciphertext modulus including the sprout modulus, may be described in Algorithm 2 in FIG. 13. In addition, accuracy of the key switching in the grafted ciphertext modulus may be ensured by accuracy of the rational rescaling.

According to an embodiment of the present disclosure, the processor 450 may adjust the plurality of homomorphic ciphertexts having different moduli and scaling factors by using the rational rescaling. In detail, modulus adjustment may be a concept corresponding to level adjustment in RNS-CKKS. Previous RNS-CKKS implementations use a fixed scaling factor for each multiplicative depth, and current RNS-CKKS implementations do not use a fixed scaling factor for each modulus. According to an embodiment of the present disclosure, before performing the addition or multiplication, the processor 450 may adjust two ciphertexts having different moduli and scaling factors.

It may be assumed that a ciphertext $ct = (b, a) \in R_Q^2$ satisfies Equation 18 below.

[Equation 18]

$$b + a \cdot s = \Delta \cdot m + e \quad (\bmod \, Q)$$

Here, $\Delta$ indicates the scaling factor, and Q may be composed of the plurality of unit moduli $q_i$ and the sprout modulus r.

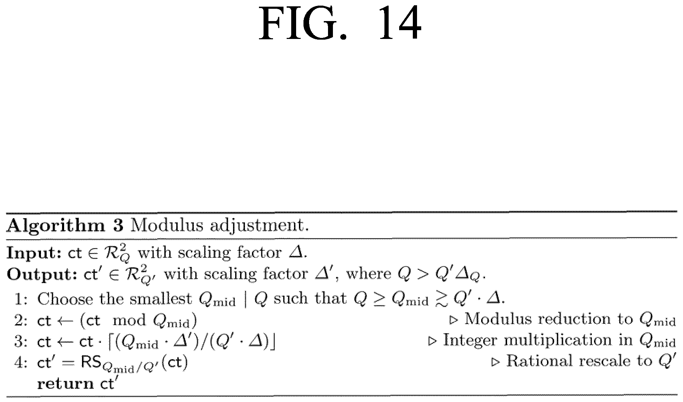

This ciphertext may be converted into the ciphertext having the smaller modulus Q' and a new scaling factor $\Delta'$. To this end, a level adjustment technique may be applied to perform an adjustment operation. This configuration may be confirmed through Algorithm 3 shown in FIG. 14. This adjustment process may be coupled within the circuit, similar to an existing level adjustment technique. This process may be referred to as circuit optimization.

In the present disclosure, the processor 450 may first select an appropriate intermediate modulus $Q_{mid}$. This intermediate modulus is a divisor of Q and may satisfy conditions of $Q \geq Q_{mid} > Q'$ and $Q_{mid} > Q' \cdot \Delta$. The processor 450 may then reduce the ciphertext modulus to $Q_{mid}$ by removing some components. The processor 450 may then convert the reduced ciphertext modulus to the final modulus Q' by multiplying the same by an integer constant and then performing the rational rescaling on its result.

An output ciphertext $ct' = (b', a') \in R_{Q'}^2$ may satisfy $b' + a' \cdot s = \Delta' \cdot m + e_{adj}$.

Here, an adjusted error $e_{adj}$ may be configured as shown in Equation 19 below.

[Equation 19]

$$\mathbf{e}_{\text{adj}} = \frac{\Delta' \mathbf{e}}{\Delta} + \frac{Q' \delta \Delta \mathbf{m}}{Q_{\text{mid}}} + \frac{\delta Q' \mathbf{e}}{Q_{\text{mid}}} + \mathbf{e}_{\text{res}}$$

Here, $\delta$ indicates a rounding error that occurs from the integer constant, $|\delta| \leq 1/2$, and $e_{res}$ may be an error that occurs in the rational rescaling process (rescaling error).

In the present disclosure, $e_{adj}$ may be maintained to a sufficiently small value by satisfying a condition $Q_{mid} > Q' \cdot \Delta$.

As mentioned above, it is important to select the appropriate sprout modulus in case of evaluating the specific circuit. That is, the given sprout modulus may not be used in another circuit, and may not be universally applicable.

The sprout modulus used in Example 1 above may only be rescaled to the multiples of 30 bits. Another method may utilize three 20-bit NTT primes, or to use 10-, 20-, or 30-bit NTT primes, thereby setting the rescaling to be possible for only multiples of 10 or 20 bits.

The following description describes a universal sprout that may be used independently of the scaling factor or the circuit. First, the present disclosure proposes the definition of the universal sprout and three candidates. Second, the present disclosure introduces a method for utilizing the RNS modulus if the sprout includes a power-of-two factor. Third, the present disclosure proposes a method for efficiently implementing the universal sprout in a machine architecture.

To overcome a limitation of the scaling factor caused by the selection of the sprout modulus, the present disclosure introduces the universal sprouts that may be used for any scaling factor. The description starts with the simplest example. This example may be viewed as a hybrid implementation combining a binary modulus and RNS-based CKKS.

(Example 2) In one or more embodiments, $q_i$'s may consist of nine 60-bit NTT primes, and the top sprout modulus $r_{top}$ may be set to $2^{60}$. Accordingly, each sprout modulus r may be expressed as a power-of-two integer that divides $r_{top}=2^{60}$. That is, each ciphertext modulus close to an integer bit size may be expressed by Equation 20 below.

[Equation 20]

$$Q = q_0 \cdots q_{\ell-1} \cdot 2^{\gamma} \approx (60 \cdot \ell + \gamma)\text{-}bit\ modulus$$

Here, the maximum modulus (Top Modulus) $Q_{max}$ may be expressed as in Equation 21 below.

[Equation 21]

$$Q_{max} = q_0 \cdots q_{L-1} \cdot 2^{60}$$

If the ciphertext modulus is approximately $(60 \cdot \ell + \gamma)$ bits, the rational rescaling may be performed using $q_{\ell'} \cdots q_{\ell-1} \cdot 2^{(\gamma-\gamma')}$ to convert the same into a new ciphertext modulus of the same number of bits. This rational rescaling may be performed regardless of $\gamma \geq \gamma'$. For example, to rescale the ciphertext modulus from $Q = q_0 \cdots q_{\ell-1} \cdot 2^{35}$ to approximately 36 bits, the rational rescaling may be performed using $q_{\ell-1}/2^{24} \approx 2^{36}$, thereby acquiring a new ciphertext modulus $Q' = q_0 \cdots \delta_{\ell-2} \cdot 2^{59}$.

As shown in Example 2 above, if a sprout (i.e., divisor of $r_{top}$) may approximately represent all bit lengths from 1 bit to $\omega$ bits, this sprout may be referred to as the universal sprout in the present disclosure. The universal sprout allows the rescaling to any bit length and may be used independently of the circuit.

However, it may be inefficient to directly handle $2^{60}$ as the modulus in a 64-bit system. To deal with this inefficiency, it is necessary to embed $\mathbb{Z}/2^{60}\mathbb{Z}$ by using a larger modulus, or use a real/complex-based Discrete Fourier Transform (DFT) instead of the NTT. However, this method requires much higher precision than a fixed-point operation, and may thus be difficult to implement and inefficient. In general, handling $2^{60}$ as the modulus may be approximately 3 times more expensive than handling 60-bit NTT primes.

Therefore, the description introduces more practical and universal sprouts in Example 3 and Example 4 below. Such a sprout may be seen as an extension of power-of-two sprouts in Example 2. Even including some power-of-two factors, such a sprout is much smaller than the machine word size, which may be handled much more easily. A cost of processing the sprout may be approximately twice as expensive as a cost of processing the word-sized NTT prime.

(Example 3) If $q_i$'s are 61-bit NTT primes and $r_{top} = 2^{15} \cdot r_1 \cdot r_2$, where $r_1$ may be a 16-bit NTT prime and $r_2$ may be the 30-bit NTT prime. In general, $r_1$ and $r_2$ may be selected as follows.

$$r_1 = 2^{16} + 1, \quad r_2 = 2^{30} - 2^{18} + 1$$

$r_1$ and $r_2$ may be NTT primes appropriate for a ring dimension $^iN \leq 2^{15}$.

Each sprout r may be expressed by Equation 22 below.

[Equation 22]

$$r = 2^{\alpha} \cdot r_1^{\beta_1} \cdot r_2^{\beta_2}$$

Here, $0 \leq \alpha \leq 15$ and $\beta_i \in \{0, 1\}$.

The sprouts may represent all bit lengths from 1 bit to 60 bits, $\{2^1,...,2^{15},r_1,r_1 \cdot 2^1,...,r_1 \cdot 2^{13},r_2, r_2 \cdot 2^1,...,r_2 \cdot r_1 \cdot 2^{15}\}$

may be the universal sprouts.

In the previous example, the rational rescaling may be performed for any bit length. For example, assuming that $r = 2^{13}$ and $r_2 \approx 2^{43}$ in the ciphertext modulus $Q = q_0 \cdots q_{\ell-1} \cdot r$, r is divided by $r_2/2$ to acquire the ciphertext modulus Q' in Equation 23 below to perform 15-bit rescaling.

[Equation 23]

$$Q' = q_0 \cdots q_{\ell-1} \cdot r'$$

$$r' = \frac{2^{13} \cdot r_2}{r_2/2} \approx 2^{14}$$

To additionally perform 34-bit rescaling, r' may be divided by $2^3 \cdot q_{\ell-1}/r_2$ to acquire the ciphertext modulus Q'' in Equation 24 below.

[Equation 24]

$$Q'' = q_0 \cdots q_{\ell-2} \cdot r''$$

$$r'' = \frac{q_\ell \cdot 2^{14}}{2^3 \cdot q_\ell/r_2} = 2^{11} \cdot r_2 \approx 2^{41}$$

This equation may indicate that the rational rescaling of larger sizes is also possible.

(Example 4) If $q_i$'s are the 61-bit NTT primes and $r_{top} = 2^{19} \cdot r_1 \cdot r_2$, where $r_1$ may be a 19-bit NTT prime and $r_2$ may be a 23-bit NTT prime. In general, $r_1$ and $r_2$ may be selected as follows.

$$r_1 = 786{,}433 , \quad r_2 = 5{,}767{,}169$$

$r_1$ and $r_2$ may be NTT primes appropriate for a ring dimension $N \le 2^{17}$.

Such a sprout may not be the universal sprout because its log value does not include a decimal point such as $\log_2 r_1 \approx 19.584$ or $\log_2 r_2 \approx 22.459$. However, such a sprout is close to 261, and may still be usable in a similar way. For example, each sprout r may be expressed by Equation 25 below.

[Equation 25]

$$r = 2^\alpha \cdot r_1^{\beta_1} \cdot r_2^{\beta_2}$$

Here, $0 \le \alpha \le 20$ and $\beta_i \in \{0, 1\}$. An appropriate sprout may be found within up to 0.5 bits of an actual bit length. That is, the rational rescaling may be performed in the same way as the previous example, and the rescaling of various sizes may be performed by utilizing the flexibility of the sprout.

Theorem 2 below summarizes a rescalable condition related to sprout selection. If the sprout is the universal sprout, the rational rescaling may be performed using any bit size.

[Theorem 2] It is assumed that the moduli $q_i$ of the ciphertext modulus satisfy the following range.

$$q_i \in [2^\omega(1 - \eta), 2^\omega(1 + \eta)]$$

Here, $\eta > 0$ and $i \in [L - 1]$.

In addition, it is assumed that the maximum spout moduli are given as follows.

$$r_{\text{top}} = r_0 \cdots r_s$$

It is assumed that $r|r_{\text{top}}$ exists for every positive integer $\gamma \le \omega$, and thus satisfies the following.

$$r \in 2^{\gamma} \cdot [1 - \epsilon, 1 + \epsilon]$$

Here, $\varepsilon > 0$.

Here, for any ciphertext modulus Q, the rational rescaling may be performed on the ciphertext by using the sprout modulus, as shown in Formula 26 below.

[Formula 26]

$$2^{\delta} \cdot 1 \pm (n\eta + 2\epsilon) + O(\eta^2 + \epsilon^2)$$

$$n = \lceil \delta/w \rceil$$

Here, , and the resealing may be performed for all positive integers $\delta < \log_2 Q$.

The sprout selected in each of Examples 2 and 3 is the universal sprout, which satisfies the assumption of Theorem 2 and may satisfy $\varepsilon < 2^{-13}$. In addition, sufficiently many 61-bit primes may exist within the following range.

$$[2^{\omega}(1 - 2^{-20}), 2^{\omega}(1 + 2^{-20})]$$

Therefore, such a sprout has universal rescalability. That is, the rational rescaling may be performed on the ciphertext by using $2^{\delta} \cdot (1 \pm 2^{-12})$ for all the positive integers $\delta$. Here, $\delta$ is a natural number smaller than a current ciphertext modulus, and the moduli may be grafted together with the sprout.

In more general, the universal sprout may be used independently of the parameter selection, such as the operation, the message precision, or the ring dimension. If the unit moduli that follow the assumption of Theorem 2 is selected, the grafted ciphertext modulus Q' output from Algorithm 1 in FIG. 12 may be selected together with the universal sprout. Universality may be ensured, and $|\log_2 r' - \log_2 \Delta|$ may thus maintain the sufficiently small value.

Finally, although the sprout used in Example 4 is not the universal sprout, this sprout may be utilized because the sprout may approximately represent all integer bits or integers within $\pm 0.5$ bits.

As described in Example 2, the most intuitive way to set the sprout modulus $r_{top}$ may be to select a power-of-two machine word size. A more general universal sprout introduced in each of Examples 2 to 4 described below may also need to include some power-of-two factors to achieve the universality. In this case, the existing CKKS scheme using power-of-two moduli may be seamlessly utilized in the Residue Number System (RNS) scheme.

To this end, processes involving the power-of-two moduli may need to be considered. In particular, the processes may include the following procedures involving modulus-changing operations:

Fast Basis Conversion (FBC), Inverse Rational Rescale (or the inverse rescaling, Inv-RS), modulus expansion (ModUp), modulus reduction (ModDown), and Rational Rescale (or the rational rescaling, RS).

These processes may be designed to be performed only between bases that are originally relatively prime. Therefore, in the next step, the description describes a method for implementing the RNS operation including the power-of-two factor, which is possible even in the grafted RNS-CKKS scheme by expanding the existing algorithm. The present disclosure starts from a case where the expansion inherently occurs.

First, Fast Basis Conversion (FBC) may be defined and proven based on Chinese Remainder Theorem (CRT) between pairwise relatively prime factors of the input modulus and between factors of P. That is, P and Q do not necessarily need to be relatively prime. More precisely, it may be assumed that P and Q may be factorized as described above. For example, the modulus Q may be expressed as follows.

$$Q = q_0 \cdots q_{\ell-1} \cdot 2^{\beta}$$

Here, if FBC is applied to a polynomial $a \in R_Q$, a CRT factor of each P may be computed as in Formula 2$^7$.

[Formula 27]

$$\sum_{j \in [\ell+1]} \left[ (a \mod q_j) \cdot \hat{q}_j^{-1} \right] q_j \mod q_j$$

Here, $\hat{q}_j \geq Q/q_j$, which may be set to $q_{\ell} := 2^{\beta}$.

Second, the other four modulus conversion procedures may also be defined and proven based on Chinese Remainder Theorem (CRT). However, in this case, these procedures may be defined based on the pairwise relatively prime factors in a product of the input modulus and the output modulus. If the power-of-two factor is not changed during the modulus conversion process, the factors included in all the operations may still remain the pairwise relatively prime. Therefore, the factors may be operated in the same way as the existing method.

If the above conditions are met, the following modulus conversion operations may be seamlessly extended:

- Inverse Rational Rescale (or inverse rational rescaling, Inv-RS)
- Modulus Expansion (ModUp)
- Modulus Reduction (ModDown)
- Rational Rescale (or rational rescaling, RS) (if performed together with the integer factor)

These operations may be performed between the input modulus Q and the output modulus Q', and need to satisfy the following conditions.

$$\operatorname{ord}_2 Q = \operatorname{ord}_2 Q'$$

That is, the power-of-two order of Q and Q may need to be the same.

However, in the grafted RNS-CKKS scheme, Inv-RS, ModDown, and RS may be used between moduli having different power-of-two factors. In the present disclosure, it may be noted that the ModUp operation is always applied after Inv-RS. This sequence may serve to adjust the power-of-two factor to the same value as the switching key modulus, and fill the gadgets. This process is described in Algorithm 2 in FIG. 13.

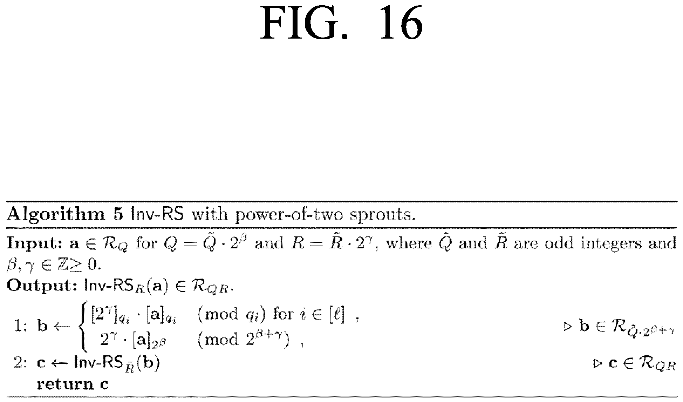

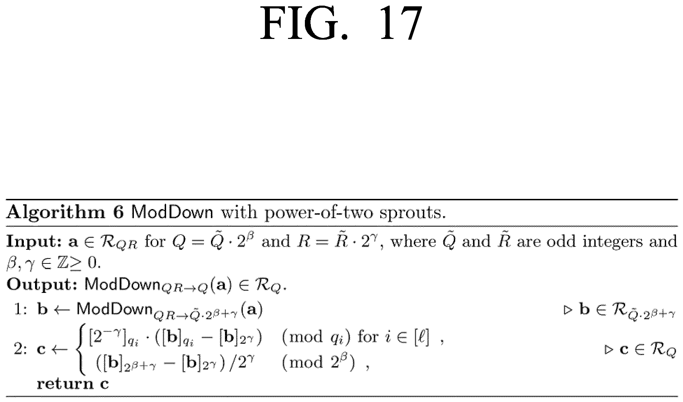

The rational rescaling having integer coefficients may be a specific case of ModDown. Therefore, in the present disclosure, Inv-RS and ModDown may be focused on. Algorithm 5 in FIG. 16 and Algorithm 6 in FIG. 17 specify a method for performing the polynomial conversion on the intermediate modulus by using the above efficient extension method.

In Algorithm 5 in FIG. 16, the intermediate polynomial needs to satisfy Equation 28 below.

[Equation 28]

$$b \equiv 2^\gamma \cdot a \quad \operatorname{mod} (\tilde{Q} \cdot 2^{\beta+\gamma})$$

Here, $\overline{Q}$ indicates the intermediate modulus, and β and γ indicate power-of-two adjustment factors. An Inv-RS operation having an integer coefficient $\overline{R}$ may then be applied. $\overline{R}$, which is an odd number, makes this application performable, and an output result may be expressed by Equation 29 below.

[Equation 29]

$$c \equiv \tilde{R} \cdot (2^\gamma \cdot a) \equiv R \cdot a \quad \operatorname{mod} (Q_R)$$

In this way, an output having a desired modulus $Q_R$ may be finally acquired using Inv-RS.

In Algorithm 6 in FIG. 17, an intermediate polynomial b needs to satisfy Equation 30 below.

[Equation 30]

$$\|b - \tilde{R}^{-1} \cdot a\|_\infty \leq \frac{k}{2}$$

Here, K indicates the number of factored factors of $\overline{R}$. In addition, finally, a $2^\beta$ modulus operation may be replaced by a γ bit shift.

A final output c may be computed as shown in Equation 31 below.

[Equation 31]

$$c = \frac{b - [b]_{2^\gamma}}{2^\gamma}$$

Therefore, Equation 32 below may be satisfied.

[Equation 32]

$$\|c - 2^{-\gamma} \cdot b\|_\infty \le \frac{1}{2}$$

This equation may lead to a relationship as shown in Equation 33 below.

[Equation 33]

$$\|c - R^{-1} \cdot a\|_\infty \le \frac{1}{2} + 2^{-\gamma} \cdot \frac{k}{2}$$

A desired result may be acquired by satisfying a condition as shown in Equation 33.

As a result, the present disclosure may perform the key switching in Algorithm 2 and the homomorphic multiplication in Algorithm 1 by using the universal sprout.

The key switching procedure may be slightly modified for the power-of-two factors. The key switching in Algorithm 2 may omit the Inv-RS operation. That is, for a power-of-two modulus part, the key switching may be performed on $2^{\mathrm{ord2}(Q)}$ by using modulus reduction. This configuration may indicate that the key switching is performed on the modulus $2^{\mathrm{ord2}(Q)}$ instead of $2^{\mathrm{ord2}(Q_{max})}$ without additional Inv-RS.

The following description discusses hardware-level arithmetic strategies and mainly focuses on a standard 64-bit processor. That is, the following description analyzes a method for efficiently implement the above-described methods. For simplicity, the description limits the discussion to a case of a single-threaded CPU.

In case of using a universal sprout appropriate for the standard 64-bit processor, a basic approach may require three 64-bit moduli to process polynomial multiplication using the NTT. To confirm this configuration, it may be assumed that r is a product of all moduli included in the sprout, and $r < 2^{64}$. To process the polynomial multiplication on the modulus r, a larger modulus p that includes the modulus r may then be utilized as follows. If the NTT is performed on the modulus p by setting modulus $p > Nr^2$, the polynomial multiplication may be emulated on modulus r. That is, the NTT operation on p may emulate the polynomial multiplication performed on r, and thus there is no need to perform the modular reduction on p. In this case, r is close to $2^{64}$, and p thus generally needs to be larger than $2^{128}$. Therefore, three 64-bit NTT primes may be required.

However, the present disclosure proposes a method of using two NTT moduli instead of three NTT moduli in a 64-bit processor environment. To make this possible, the NTT that utilizes composite numbers (Composite Number NTT) may be used instead of primes. The composite number-based NTT is a method of configuring the NTT moduli by using the composite numbers instead of the primes, which may perform the same operation while using fewer NTT modules than the existing method.

(Example 5) In this Example, $r_{top} = 2^{15} \cdot r_1 \cdot r_2$, as shown in Example 3, where $r_1$ may be a 16-bit NTT prime and $r_2$ may be the 30-bit NTT prime. Its core idea is that modulus $r_1 r_2 \approx 2^{46}$ may be handled using composite number-based NTT (Composite NTT). Both $r_1$ and $r_2$ are the NTT primes, and the 2Nth primitive roots of unity for $r_1 r_2$ may thus be easily found. Therefore, $2^{15}$ modulus operation may be emulated by setting one NTT modulus as $r_1 r_2$, setting the other NTT modulus as $g > N \cdot 2^{30}$, and performing g modulus operation. This method allows the operation to be performed using only two NTT moduli instead of the existing three NTT moduli.

This strategy may also be compatible with the key switching based on Ring Learning With Errors (RLWE). If the sprout modulus includes only $r_1$ or $r_2$ at any moment, the sprout modulus may be readily included (embedded) as $r_1 r_2$ moduli without additional conversion. This process may be defined while maintaining compatibility with the NTT. That is, an embedding operation $\mathrm{Embed}_{r_1 \to r_1 r_2}$ may be defined by Equation 34 below.

[Equation 34]

$$\mathrm{Embed}_{r_1 \to r_1 r_2} \circ \mathrm{NTT}_{r_1} = \mathrm{NTT}_{r_1 r_2} \circ \mathrm{Embed}_{r_1 \to r_1 r_2}$$

In the above equation, the embedding operation needs to be established in $R_{r1}$.

For example, a simple method for defining embedding is as follows. The embedding may be performed by adding zero to the $r_2$ modulus, or by applying Chinese Remainder Theorem (CRT) later. In this way, in the $r_1$ modulus, the left and right terms correspond to $\mathrm{NTT}r_1$, and in the $r_2$ modulus, the left and right terms may always be equal to zero.

If the sprout modulus is sufficiently small, a single word-sized NTT may be used to perform the NTT operation. In particular, the following two types of sprouts suggested in Example 3 may support the single-word operation. For the sprout without $r_2$ (a first type), g may be set sufficiently large, and the $2^{15}$ modulus operation may thus be performed without overflow in the modulus g. Therefore, a single-word composite-number-based NTT may be performed using $g \cdot r_1$. For a sprout that includes sufficiently small power-of-two factors (a second type), for example, if the sprout is $2^t \cdot r_1 \cdot r_2$ and $t \leq 15$, a $2^t$ modulus may be included in $g' > 2^{2t} \cdot N$. Therefore, the entire sprout may be included in $g' \cdot r_1 \cdot r_2$. If $g' \cdot r_1 \cdot r_2 < 2^{64}$, the single-word composite-number-based NTT may be performed.

The present disclosure may use another word size than a standard 64-bit word size. However, a basic strategy may be almost the same as a standard 64-bit approach. That is, as many NTT moduli as possible may be packed into the composite number-based NTTs (Composite NTTs) and the remaining moduli may be embedded into larger moduli.

(Example 6) For a hardware architecture where the word size is $2^\omega$ bits (where $\omega \geq 7$, i.e., 128 bits or more), the strategy used in a 64-bit case may be easily generalized. That is, the top sprout $r_{top}$ may be selected as follows.

$$r_{\mathrm{top}} = 2^{15} \cdot r_1 \cdot r_2 \cdots r_{\log_2(\omega) - 4}$$

Here, for $1 \leq i \leq \log_2(\omega) - 4$, $r_i$ indicates a 29-bit sized prime.

This sprout may perform the operation by using two word sizes, as in the standard 64-bit case. That is, the power-of-two factor (power-of-two part) may be embedded into a larger prime, and the remaining factors may be processed using the composite-based NTT (Composite NTT).

(Example 7) A strategy for a 32-bit word size is as follows. First, the top sprout $r_{top}$ may be selected as follows.

$$r_{\mathrm{top}} = 2^{15} \cdot r$$

Here, $r = 2^{16} + 1$ indicates a 16-bit NTT prime.

$2^{15}$ may be embedded into two large word-sized NTT primes $g_1$ and $g_2$. That is, $g_1$ and $g_2$ are sufficiently large word-sized NTT primes, and need to satisfy the following condition.

$$2^{30} \cdot N < g_1 g_2$$

In this case, the sprout operation may be processed using three words $g_1$, $g_2$, and r.

If the power-of-two part $2^t$ is sufficiently small to thus hold $2^{2t} \cdot N < g_1$, and $2^t$ may then be included in one modulo $g_1$. That is, the operation may be performed using only two words, $g_1$ and r.

Grafting may address specific constraints of the existing implementations by decoupling the scaling factor from the RNS modulus. Grafting may be effective in both low-precision and high-precision scenarios. The reason is that the size of the scaling factor is often not a multiple of the machine word size. In addition, the existing method requires finding a specific small NTT prime, while Grafting does not. Grafting may solve the problem in some cases where no NTT prime of the corresponding size exists. In addition, Grafting may also assist in accelerating the composite rescaling (Composite Rescaling) or tuple-CKKS multiplications. Grafting does not require pre-reserving any fixed RNS moduli to maintain a specific precision. Due to these characteristics, Grafting is hardware- and compiler-friendly, and may be used flexibly in various circuits because its computation is not fixed depending on the selection of the homomorphic operation.

The following description describes various application cases that utilize Grafting. Grafting freely sets the ciphertext modulus, thus enabling any circuit to be computed using arbitrary precision. This computation may be performed independently of the selection of the ciphertext modulus. In particular, the present disclosure describes a method for optimizing a CKKS bootstrapping technique. The first method is a technique for shortening execution time (run-time) by freely changing the output modulus, while the second method is a technique for reducing modulus consumption. In addition, the present disclosure also describes acceleration of the tuple-CKKS multiplication. In particular, the present disclosure may present a method for reanalyzing the tuple-CKKS multiplication and utilizing Grafting to thus improve operation performance.

In general, CKKS bootstrapping may be used to maximize a multiplicative budget to enable additional operations to be performed. A bootstrapping process may include homomorphic decoding of the ciphertext, modulus raising, re-encoding of the ciphertext, and modular reduction to a base modulus. In this process, the respective operations may be referred to as an operation to convert the ciphertext to slot representation (SlotToCoeff), an operation to increase a modulus size (ModRaise), an operation to convert the slot representation back to coefficient representation (CoeffToSlot), and an operation to evaluate the modulus operation by using polynomial approximation (EvalMod). A given input ciphertext $ct \in R_{q_m}^2$ may basically have the message m in its encrypted state, a new ciphertext $ct' \in R_{Q_{max}}^2$ using the modulus $Q_{max}$ has a message $m + q_0 I$ in its encrypted state, and an operation using a modulus Mod $q_0$ that is performed based on $q_0$ may then be evaluated by using the polynomial approximation.

EvalMod with Adaptive Precision

In an EvalMod process, reduction of the modulus Mod $q_0$ may be approximated by a sine function near zero, which may be decomposed into Cosine Approximation, Double Angle Formula, and Arcsine Approximation.

The present disclosure may utilize Chebyshev approximation of a cosine function. For example, the present disclosure may use Chebyshev coefficients (Chebyshev Basis) expressed as a 63-degree polynomial. As a polynomial degree is increased, the coefficients tend to get smaller. Therefore, the modulus consumption may be reduced by scaling the coefficients less precisely while maintaining final precision. For example, a circuit for evaluating the polynomial may be segmented into two subordinate circuits using different modulus chains.

1) Compute the first half of the polynomial (degrees zero to 31) → Consume five multiplication depths while maintaining desired precision.

2) Compute the second half of the polynomial (degrees 32 to 63) → Consume six multiplication depths while using smaller coefficients, thus performing the computation with lower precision.

The second half requires more multiplication depths, thereby reducing the modulus consumption in an entire polynomial approximation process. For example, if five depths ($\Delta \approx 42$ bits) + six depths ($\Delta \approx 37$ bits) are performed in parallel, a total modulus consumption is $\max(5 \times 42, 6 \times 37) = 222$ bits, thereby saving a 30-bit modulus compared to the existing method (6 x 42 = 252 bits). However, two subcircuits need to compute Chebyshev Bases, respectively, thereby slightly increasing a cosine function evaluation cost. This method may also be extended to a general Chebyshev Approximation evaluation method, thereby further reducing the modulus consumption.

Bootstrapping with Flexible Output Modulus.

In general, the bootstrapping aims to maximize the multiplicative budget for future computations. However, the maximum budget may not be necessary depending on the circuit being evaluated. For example, high modulus computation may be more expensive for a circuit that includes shallow multiplication depth and wide parallel computation. For example, if a neural network layer is computed, this layer may involve large matrix multiplication followed by polynomial evaluation (activation function approximation). Depending on a matrix size, it may be more efficient to evaluate matrix multiplication by using the smallest modulus and then refresh the modulus to evaluate the rest of the circuit, such as by using the activation function. That is, it may be more efficient to consider only a few multiplication steps and set a smaller modulus instead of maintaining the maximum modulus in case of evaluating the matrix multiplication. However, this method may not be easily implemented using original bootstrappable CKKS parameters. The precision in a bootstrapping sub-procedure needs to be larger than that of other multiplications for the same output precision. Therefore, the scaling factor may be selected differently to optimize the implementation. This selection restricts the speedup of the bootstrapping procedure by performing the modulus reduction to any desired size. However, these constraints no longer apply to the Grafting scenario, and the output modulus may be flexibly selected, which may lead to the speedups proportional to the modulus size.

Prior Art 1: Cheon, J.H., Cho, W., Kim, J., & Stehle, D. Homomorphic multiple precision multiplication for CKKS and reduced modulus consumption, in W. Meng, C.D. Jensen, C. Cremers, & E. Kirda (Eds.), Proceedings of the ACM Conference on Computer and Communications Security (CCS) (pp. 696-710), ACM Press (Nov. 2023). Prior Art 1 introduces a new multiplication algorithm for CKKS and reduces the modulus consumption in each homomorphic multiplication. Gradually, their algorithms may achieve similar throughput or even better latency in case of switching to smaller rings. However, in many cases, the reduced modulus consumption does not directly lead to improved efficiency. The reason is that the performance of computing q is roughly the same as long as q fits the machine word size. Grafting may bridge a gap between expectations and reality. That is, tuple multiplication does not significantly reduce the throughput compared to an original (single) multiplication.

Hereinafter, the compatibility of tuple multiplication in Grafting and its efficiency may be verified. The present disclosure follows the notation used in Prior Art 1. CT indicates a ciphertext tuple, $Q^{(\ell)}$ indicates the ciphertext modulus a level $\ell$, $\otimes$ indicates CKKS tensor operation, Relin indicates CKKS relinearization, RSq indicates the rescaling by q, and DCP and RCB indicate the decomposition of the CKKS ciphertext into quotients and remainders and their reassembly. For simplicity, the present disclosure focuses on pair multiplication, and general tuple multiplication may be verified in almost the same way.

The sole difficulty in applying the concept of compatible Grafting is defining pair rescaling if a rescaling factor $Q^{(\ell)}/Q^{(\ell-1)}$ does not belong to Z. This difficulty may occur in a Graphing framework of the present disclosure. The present disclosure defines a generalized version of the pair rescaling as follows.

Definition 2 (Pair Rescaling, Rational Numbers). $CT = (\hat{ct}, \check{ct}) \in R^2_{Q^{(\ell)}} \times R^2_{Q^{(\ell)}}$ may be a ciphertext pair. In $\alpha_\ell/\beta_\ell = Q^{(\ell)}/Q^{(\ell-1)}$, $\alpha_\ell, \beta_\ell \in \mathbb{Z}_{>0}$ are coprime natural numbers. The rescaling of CT is defined as $R^2_{Q^{(\ell-1)}} \times R^2_{Q^{(\ell-1)}}$, and follows Equation 35 below.

[Equation 35]

$$\mathsf{RS}^2_{\alpha_\ell/\beta_\ell} := \left(\mathsf{RS}_{\alpha_\ell}(\beta_\ell \cdot \hat{ct}), \mathsf{RS}_{\alpha_\ell}(q_{\mathsf{div}}\beta_\ell \cdot \hat{ct} + \beta_\ell \cdot \check{ct}) - q_{\mathsf{div}} \cdot \mathsf{RS}_{\alpha_\ell}(\beta_\ell \cdot \hat{ct})\right)$$

In addition, the present disclosure provides a generalized version of Lemma 4.6 of Prior Art 1 in Lemma 1 below, which may show the accuracy of the pair multiplication after changing a definition of the pair rescaling.

Lemma 1. $CT = (\hat{ct}, \check{ct}) \in R^2_{Q^{(\ell)}} \times R^2_{Q^{(\ell)}}$ may be the ciphertext pair. In $\alpha_\ell/\beta_\ell = Q^{(\ell)}/Q^{(\ell-1)}$, $\alpha_\ell, \beta_\ell \in \mathbb{Z}_{>0}$ are the coprime natural numbers. sk = (1, s) $\in R^2$ may be the secret key having Hamming weight h. In addition, a quantity according to Formula 36 below has an infinity norm $\leq (h + 1)/2$.

[Formula 36]

$$\left[\left(\mathsf{RCB}_{q_{\mathsf{div}}}(\mathsf{RS}^2_{\alpha_\ell/\beta_\ell}(CT))\right) \cdot \mathsf{sk}\right]_{Q^{(\ell-1)}} - \frac{\beta_\ell}{\alpha_\ell}\left[(\mathsf{RCB}_{q_{\mathsf{div}}}(CT)) \cdot \mathsf{sk}\right]_{Q^{(\ell)}}$$

Theorem 3 below is a theorem similar to Theorem 4.8 of Prior Art 1, which ensures the accuracy of the pair multiplication. The accuracy of the pair multiplication is proven in Lemma 1. Mult$^2$ may be defined as a composition of tensor, relinearization, and rescaling.

[Theorem 3] $Let\ CT = (\hat{ct}_1, \check{ct}_1), CT_2 = (\hat{ct}_2, \check{ct}_2) \in R^2_{Q^{(\ell)}} \times R^2_{Q^{(\ell)}}$ may be the ciphertext pair. In $\alpha_\ell/\beta_\ell = Q^{(\ell)}/Q^{(\ell-1)}, (\alpha_\ell, \beta_\ell) = 1$, and sk = (1, s) $\in R^2$ may be the secret key having the Hamming weight h. It may be assumed that $\|\mathsf{Dec}(\hat{ct}_i)\|_\infty \leq \hat{M}$ and $\|\mathsf{Dec}(\check{ct}_i)\|_\infty \leq \check{M}$ hold for all $i \in \{1,2\}$, and $\hat{M}, \check{M}$ satisfy Formula 37 below.

[Formula 37]

$$N(\hat{M}q_{\mathsf{div}} + \check{M})^2 + E_{\mathsf{Relin}} + h < Q^{(\ell)}/2$$

In addition, a quantity according to Formula 38 below has a value having an infinity norm $\leq (N\hat{M}^2/q_{\mathsf{div}} + E_{\mathsf{Relin}} + h) \beta_\ell/\alpha_\ell + (h + 1)/2$.

[Formula 38]

$$[(RCB_{q_{div}}(Mult^2(CT_1, CT_2))) \cdot sk]_{Q^{(\ell-1)}}$$
$$- \frac{\beta_\ell}{\alpha_\ell} \cdot [(RCB_{q_{div}}(CT_1) \cdot sk) \cdot (RCB_{q_{div}}(CT_2) \cdot sk)]_{Q^{(\ell)}}$$

Efficiency. Next, the description describes efficiency improvement if Grafting is applied to double-CKKS. $a = \lfloor \log_2(q_{div}) \rfloor, b = \lfloor \log_2(Q^{(\ell)}/Q^{(\ell-1)}) \rfloor$ may be a size of a division prime and a size of a rescaling factor, respectively. Here, b may be selected slightly larger than a. In case of comparing Mult with Mult$^2$, the a + b bit RLWE multiplication in Mult may be compared to two b bit multiplications in Mult$^2$. Assuming that a + b bit computation is (a + b)/b times more expensive than b bit computation, Mult$^2$ needs to have asymptotically the same throughput as Mult. However, the actual implementation is affected by the machine word size, and in the worst case, Prior Art 1 estimates that Mult$^2$ may be twice as slow as Mult in terms of the throughput. Table 2 of Prior Art 1 provides parameters for increasing an isomorphic capacity compared to an existing CKKS parameter using 57-bit primes. A modulus used in Prior Art 1 may be composed of two 61-bit primes, eighteen 38-bit primes, and three 23-bit primes. Grafting allows the use of 15 unit moduli, each having approximately 61 bits. This configuration allows the use of 14 dnums instead of 22 dnums, and 15 RNS moduli instead of 23 RNS moduli. As a result, double-CKKS using Grafting may be expected to show a performance improvement of approximately $\frac{22}{14} \times \frac{23}{15} \approx 2.41$ times. The present disclosure notes that the efficiency improvement may be even more significant for lower precisions or fewer slots. In this case, a smaller division prime and a smaller rescaling factor may be needed. For example, $\log_2(q_{div}) \leq 10$ and $\log_2(Q^{(\ell)}/Q^{(\ell-1)}) \leq 20$ may be used for precision $\leq$ 15-bit, which may lead to $\geq$ 3x performance improvement compared to pure double-CKKS implementation.

Meanwhile, the RNS in the homomorphic encryption is a method proposed to increase efficiency of the homomorphic operation. Grafting may solve inefficiency, which is caused by applying the RNS to CKKS, i.e., inefficiency caused by using more NTT processors than the theoretically optimal number, by presenting a modulus composition referred to as the sprout as a part of the entire RNS modulus. However, there may be inefficiencies in configuring the sprout itself although this method greatly reduces the total number of the NTT processors. For example, the sprout is not the NTT prime. Accordingly, the sprout is unable to use the NTT processor that exactly fits its size, and needs to use a larger one.

Therefore, in performing various homomorphic operations, it is necessary to reduce the number of NTT processors required for the sprout to thus achieve efficiency gains. Here, the NTT processor may efficiently perform polynomial multiplication over a ring R_q=Z_q[x]/(x^N+1) for the NTT prime q (or pseudo NTT prime, which is a prime that is not fully split and therefore does not have the 2Nth roots of unity, and has Nth roots of unity) by using the NTT (or pseudo NTT). When split into multiple qs in this way, assume that one NTT processor is required for each q. A possible size of q needs to be less than $2^{(w-2)}$. Here, w indicates the machine word size. For example, the 64-bit processor requires q to be less than $2^{62}$.

The NTT processor based on the sprout in the 64-bit processor may have the following two basic configuration operations. The first operation is Composite NTT, where for two NTT primes $q_1$ and $q_2$ with $q_1 * q_2 < 2^{62}$, 2Nth roots of unity mod q1 and mod $q_2$ are processed as values in mod $q_1 * q_2$, and the computation is performed as the NTT for $q_1 * q_2$. The second operation is embedded NTT, where for a non-NTT prime q with $q_2 * N / 2 * dnum < 2^{64}$, an NTT prime Q is selected with $q^{2*N}/2*dnum <= Q < 2^{64}$, polynomial multiplication over R_Q is performed using NTT mod Q, and a result of the polynomial multiplication in R_Q is then recovered using a mod q operation.

According to an embodiment of the present disclosure, if sprout r = $g_1*g_2*g_3$, $g_1$ = 31-bit NTT prime, $g_2$ = 16-bit NTT prime (or $2^{16}+1$), and $g_3 = 2^{15}$. In this case, the sprout is not the NTT prime, and thus requires three word-sized NTT processors. Alternatively, if some sprouts remain, the electronic apparatus 100 may use two NTT processors if (128-logN)/2 = 56 bits or less. If some sprouts remain, the electronic apparatus 100 may use only one NTT processor if (64-logN)/2 = 24 bits or less. For reference, the modulus change may be as follows. The number of bits may be in parentheses.

Sprout r= $g_1*g_2*g_3$ (62)) $\rightarrow g_1*g_2*2^{14}$ (61) $\rightarrow ... \rightarrow g_1*g_2$ (47) $\rightarrow g_1*g_3$ (46) $\rightarrow g_1*2^{14}$ (45) $\rightarrow ... \rightarrow g_1$ (31) $\rightarrow g_2*2^{14}$ (30) $\rightarrow ... \rightarrow g_2$ (16) $\rightarrow g_3$ (15) $\rightarrow ... \rightarrow 2^1$ (1).

According to an embodiment of the present disclosure, the number of the word-sized NTT processors may be reduced to two. In detail, in case that the sprout modulus is expressed as a product of $g_1$, which is the 31-bit Number Theoretic Transform (NTT) prime, $g_2$, which is a 16-bit NTT prime or in the form of a $2^{16}+1$, and $G_3$, which is a value in the form of 2, the processor 450 may process a product of $g_1$ and $g_2$ by using Composite NTT and process $g_3$ by using the embedded NTT to thus integrate their results into $G_3$ if the machine word size is greater than 38 bits and less than or equal to 64 bits. That is, the electronic apparatus 100 may use two NTT processors if the machine word size is greater than 38 bits and less than or equal to 64 bits. The processor 450 may process $g_3$ by using the embedded NTT to thus acquire $G_3$ if the

machine word size is less than or equal to 38 bits. Here, the electronic apparatus 400 may use one NTT processor if the machine word size is less than or equal to 38 bits. However, the configuration method and the required number of NTTs may vary depending on the remaining sprouts (the number of bits).

As an example, if all the sprouts remain (if the number of bits is 62 bits), $g_1*g_2$ may be processed using comNTT, and $g_3$ may be processed using the embedded NTT to thus acquire $G_3$. In this case, the electronic apparatus 400 may use two NTT processors.

As an example, if no $g_1$ remains (i.e., the number of bits is 31 bits), $g_2*G_3$ may be processed using comNTT. In this case, the electronic apparatus 400 may use one NTT processor.

As an example, if no $g_2$ remains (if the number of bits is 46 bits), $g_1$ may be processed using the NTT, and $g_3$ may be processed using the embedded NTT to thus acquire $G_3$. In this case, the electronic apparatus 400 may use two NTT processors.

As an example, if no $g_3$ remains (i.e., the number of bits is 47 bits), $g_1*g_2$ may be processed using comNTT. In this case, the electronic apparatus 400 may use one NTT processor.

As an example, if $g_3$ is partially missing (i.e., the number of bits is 38 bits), $g_1*GG_3$ (the remaining $g_3 \sim 2^7 \rightarrow GG_3 \sim 2^{31}$) may be processed using comNTT. In this case, the electronic apparatus 400 may use one NTT processor.

The following description describes the optimization in the case of the key switching. The key switching is a process of switching the encrypted data to a new key, and includes several optimization methods to increase the efficiency. The present disclosure describes these optimization methods as including the following three methods (Method 1, Method 2, and Method 3).

1) Method 1: If ctxt and key are always in the same format (format a)

This method may be used as the optimization method if both a ciphertext ctxt and the key are always in the same format (format a). Here, the optimization may be performed using modulus multiplier increase (ModRaise) and modulus reduction (ModRed) or the inverse rescaling (Inv-Rescale).

2) Method 2: If various optimizations are applied to ctxt, and the key is always in the format a.

This method may be used if various optimizations are applied to the ciphertext ctxt and the key is always in the format a. In this case, ctxt needs to be converted to the format a, and then be proceeded as in Method 1. This conversion may require at most one additional NTT computation. However, the remaining process may be integrated into modulus upgrade (ModUp) to thus improve the efficiency.

3) Method 3: If various optimizations are applied to ctxt, and the key is received in the format a and converted into various formats.

This method may be used if various optimizations are applied to the ciphertext, and the key is received in the format a and then converted into various formats. This method proceeds like Method 1, and unable to be applied to a format c'.

The description describes an operation of the NTT processor based on the sprout in a 32-bit processor. The goal is to use the NTT as much as possible if the NTT is faster than Toom-Cook. However, the NTT or Discrete Fourier Transform (DFT) is unable to be used for the part $g_3$. Here, Toom-Cook or text-book multiplication method may be used for $g_3$. The sprout strategy presented in Grafting is a method for utilizing the NTT more efficiently by using 16 bits + $2^{15}$ ($g_2$ & $g_3$) configuration. However, the NTT or the DFT is unable to be used for $g_3$, thus requiring an alternative method for this part.

According to an embodiment of the present disclosure, a method using double sprouts may be provided. Here, a sprout 1 sp1 may be 16 bits + $2^{15}$ ($g_2$ & $g_3$). A sprout 2 sp2 may be 24 bits + $2^7$. The modulus chain may be $(24+7) \rightarrow ... \rightarrow 24 \rightarrow 16+7 \rightarrow ... \rightarrow 16 \rightarrow 15 \rightarrow ... \rightarrow 8 \rightarrow 7 \rightarrow ... \rightarrow 1$. The modulus chain may be a method in which the sprout passes through various sizes, such as 24 bits, 16 bits and the like, and gradually decreasing to a smaller size at each step. The key switching may be applied as follows: sp2 $\rightarrow$ sp1, Toom-Cook $\rightarrow$ sp2 (based on M1). That is, the key switching process may be a method of switching the key from sp2 to sp1 and then applying the Toom-Cook method to switch the key back to sp2.

The present disclosure describes the key switching as including the following four methods (Method 1, Method 2, Method 3, and Method 4).

1) Method 1: A method of using two keys based on the sprout, where the Toom-Cook method may be applied if ModUp is to be performed on sp1.

2) Method 2: A method of receiving a key for sp1 and generating a key for sp2 using ModSwitch, where the key for sp1 is received and the key for sp2 is generated in advance using ModSwitch, and the process may then proceed in the same way as Method 1.

3) Method 3: A method of using a single key (for sp2) and switching ctxt from sp1 to sp2 before ModUp, where the ciphertext is converted from format sp1 to format sp2 by using the single key for sp2 before ModUp.

4) Method 4: A method of using a single key (24 bits + 16 bits + 15 bits) and requiring a large P, where the processing is carried out using this single key (24 bits + 16 bits + 15 bits).

Meanwhile, the above-described embodiment describes the 64-bit or 32-bit processor, which is only an example, and may also be applied to processors of other bit sizes.

Meanwhile, according to an embodiment of the present disclosure, the scaling factor $\Delta$ may be dynamically changed if the operation on the homomorphic ciphertext is performed using Grafting. That is, the scaling factor $\Delta$ may be adjusted even while the operation is in progress. By utilizing this configuration, the modulus consumption may be reduced. That is, if the same scaling factor is used for all sub-circuits as in the prior art, the scaling factor $\Delta$ may remain the same, even though the operation depth and precision of each sub-circuit may differ. In this case, the modulus consumption may be large. However, as in the present disclosure, the scaling factor $\Delta$ may be adjusted for each sub-circuit to optimize the modulus consumption. That is, in the sub-procedure that does not require the high precision during the operation, the modulus consumption may be reduced by using the scaling factor $\Delta$ smaller than usual.

In particular, if the homomorphic operation is performed on the polynomial having a high degree such as the 31st, 63rd, or 127th degree polynomial, the coefficients of the high-degree terms are typically much smaller than those of the low-degree terms, thereby reducing the modulus consumption by using a smaller scaling factor $\Delta$. For example, the 0th to 31st terms of the 63rd-degree polynomial may require four multiplicative depths, while the 32nd to 63rd terms may require five multiplicative depths. Here, the 0th to 31st terms may use a large scaling factor $\Delta_{large}$ for the four depths, while the 32nd to 63rd terms may use a smaller scaling factor $\Delta_{small}$ for the five depths, thereby achieving the modulus consumption corresponding a depth of max ($\Delta_{large}$ x 4, $\Delta_{small} \times 5$).

This configuration may reduce an additional operation cost.

As one or more embodiments, EvalMod is one of operations used in the homomorphic encryption (FHE), and generally indicates a process of evaluating the mod operation. EvalMod has multi-level multiplication depths, and it is thus important to improve the operation efficiency. In particular, the precision related to Sine/Cosine Approximation may be adjusted using the EvalMod operation. Therefore, according to an embodiment of the present disclosure, Grafting may be utilized to adjust the operation precision, and the high-order coefficients may be optimized, thereby optimizing the modulus consumption. For example, if EvalMod is performed on the ciphertext having the maximum degree of 63, the EvalMod (FVa) method according to the present disclosure may save approximately 50 bits of modulus consumption compared to the existing method. As a result, the operation cost may be reduced by up to 17%.

That is, according to an embodiment of the present disclosure, the modulus consumption may be reduced.

Meanwhile, the method according to the various embodiments of the present disclosure may be provided as included in a computer program product. The computer program product may be traded as a commodity between a seller and a purchaser. The computer program product may be distributed in the form of a storage medium (for example, a compact disc read only memory (CD-ROM)) that may be read by a machine, or may be distributed online (for example, downloaded or uploaded) through an application store (for example, PlayStore™) or directly between two user devices (for example, smartphones). In case of the online distribution, at least a portion of the computer program product (e.g., downloadable application) may be at least temporarily stored on a machine-readable storage medium such as the memory of a server of a manufacturer, a server of an application store or a relay server, or be temporarily generated.

The various embodiments of the present disclosure may be implemented in software including an instruction stored on the machine-readable storage medium (e.g., computer-readable storage medium). A machine may be a device that invokes the stored instruction from a storage medium, may be operated based on the invoked instruction, and may include the electronic apparatus according to the disclosed embodiments.

Meanwhile, the machine-readable storage medium may be provided in the form of a non-transitory storage medium. Here, the "non-transitory storage medium" is a tangible device and may only indicate that this storage medium does not include a signal (e.g., electromagnetic wave), and this term does not distinguish a case where data is stored semi-permanently on the storage medium and a case where data is temporarily stored on the storage medium from each other. For example, the "non-transitory storage medium" may include a buffer in which data is temporarily stored.

If the instruction is executed by the processor, the processor may directly perform a function corresponding to the instruction or other components may perform the function corresponding to the instruction under the control of the processor. The instruction may include a code generated or executed by a compiler or an interpreter.

Although the embodiments are shown and described in the present disclosure as above, the present disclosure is not limited to the above-described specific embodiments, and may be variously modified by those skilled in the art to which the present disclosure pertains without departing from the gist of the present disclosure as claimed in the accompanying claims. These modifications should also be understood to fall within the scope and spirit of the present disclosure.

**Claims**

1. An electronic apparatus comprising:

    a memory for storing at least one instruction; and
    a processor,

wherein the processor is configured to
acquire a homomorphic ciphertext by using a Residue Number System (RNS) modulus including a plurality of moduli each having a size corresponding to a machine word size, and
perform an operation on the homomorphic ciphertext by using rational rescaling.

2. The apparatus as claimed in claim 1, wherein the plurality of moduli include sprout moduli composed of a product of primes each having a size less than or equal to the machine word size.

3. The apparatus as claimed in claim 2, wherein the processor is configured to

generate an intermediate modulus by resurrecting the sprout modulus, and
acquire an output modulus by rescaling the intermediate modulus,
the intermediate modulus being a multiple of the output modulus.

4. The apparatus as claimed in claim 2, wherein the processor is configured to perform a key switching operation on the homomorphic ciphertext by using the sprout modulus.

5. The apparatus as claimed in claim 2, wherein in case that the sprout modulus is expressed as a product of $g_1$, which is a 31-bit Number Theoretic Transform (NTT) prime, $g_2$, which is a 16-bit NTT prime or in the form of $2^{16}+1$, and $g_3$, which is a value in the form of 2,
the processor is configured to

process a product of $g_1$ and $g_2$ by using composite number-based NTT (Composite NTT) and process $g_3$ by using embedded NTT to thus integrate their results into $G_3$ if the machine word size is greater than 38 bits and less than or equal to 64 bits, and
process $g_3$ by using the embedded NTT to thus acquire $G_3$ if the machine word size is less than or equal to 38 bits.

6. The apparatus as claimed in claim 5, wherein two NTT processors are used if the machine word size is greater than 38 bits and less than or equal to 64 bits, and
one NTT processor is used if the machine word size is less than or equal to 38 bits.

7. The apparatus as claimed in claim 1, wherein the processor is configured to

generate an intermediate modulus by upscaling the RNS modulus,
perform a key switching operation on the intermediate modulus, and
perform rescaling on the intermediate modulus on which the key switching operation is performed.

8. The apparatus as claimed in claim 1, wherein the processor is configured to adjust the plurality of homomorphic ciphertexts having different moduli and scaling factors by using the rational rescaling.

9. A control method of an electronic apparatus, the method comprising:

acquiring a homomorphic ciphertext by using a Residue Number System (RNS) modulus including a plurality of moduli each having a size corresponding to a machine word size included in the electronic apparatus; and
performing an operation on the homomorphic ciphertext by using rational rescaling.

10. The method as claimed in claim 9, wherein the plurality of moduli include sprout moduli composed of a product of primes each having a size less than or equal to the machine word size.

11. The method as claimed in claim 10, wherein the performing includes

generating an intermediate modulus by resurrecting the sprout modulus, and
acquiring an output modulus by rescaling the intermediate modulus,
the intermediate modulus being a multiple of the output modulus.

12. The method as claimed in claim 10, wherein in the performing,
a key switching operation is performed on the homomorphic ciphertext by using the sprout modulus.

**13.** The method as claimed in claim 10, wherein in case that the sprout modulus is expressed as a product of $g_1$, which is a 31-bit Number Theoretic Transform (NTT) prime, $g_2$, which is a 16-bit NTT prime or in the form of $2^{16}+1$, and $g_3$, which is a value in the form of 2,
in the performing,

a product of $g_1$ and $g_2$ is processed by using composite number-based NTT (Composite NTT) and $g_3$ is processed by using embedded NTT to thus integrate their results into $G_3$ if the machine word size is greater than 38 bits and less than or equal to 64 bits, and
$g_3$ is processed by using the embedded NTT to thus acquire $G_3$ if the machine word size is less than or equal to 38 bits.

**14.** The method as claimed in claim 13, wherein two NTT processors are used by the electronic apparatus if the machine word size is greater than 38 bits and less than or equal to 64 bits, and
one NTT processor is used by the electronic apparatus if the machine word size is less than or equal to 38 bits.

**15.** The method as claimed in claim 9, wherein the performing includes

generating an intermediate modulus by upscaling the RNS modulus,
performing a key switching operation on the intermediate modulus, and
performing rescaling on the intermediate modulus on which the key switching operation is performed.

# FIG. 1

200

FIRST SERVER
DEVICE

$Ct_1$, $Ct_2$ | $Ct_1+Ct_2$

300

10 ～ NETWORK $Ct_1+Ct_2$ → SECOND SERVER
DEVICE

$Ct_1$ | $Ct_2$

FIRST ELECTRONIC
APPARATUS

SECOND ELECTRONIC
APPARATUS

. . .

NTH ELECTRONIC
APPARATUS

100-1 | 100-2 | 100-n

# FIG. 2

400

450

| 420 — MEMORY | ⟷ | PROCESSOR | ⟷ | MANIPULATION INPUT DEVICE — 440 |

| 410 — COMMUNICATION DEVICE | ⟷ | | ⟷ | DISPLAY — 430 |

# FIG. 3

# FIG. 4A

411     412

# FIG. 4B

421 422 423

# FIG. 5

# FIG. 6

610          620

# FIG. 7

general KeySwitch

Q - ScaleUp

Q - Rescale

710          720          730

EP 4 607 842 A1

# FIG. 8

# FIG. 9

# FIG. 10

# FIG. 11

# FIG. 12

---

**Algorithm 1** Homomorphic multiplication with modulus resurrection.

---

**Input:** $\mathsf{ct}_i = (\mathbf{b}_i, \mathbf{a}_i; \Delta) \in \mathcal{R}_Q^2$ for $i = 0, 1$ for the modulus $Q = q_0 \cdots q_{\ell-1} \cdot r$, the scaling factor $\Delta$, and the relinearization key $\mathsf{rlk} \in \mathcal{R}_{PQ_{\max}}^{2 \cdot \mathsf{dnum}}$.

**Output:** $\mathsf{ct} = (\mathbf{b}, \mathbf{a}; \Delta') \in \mathcal{R}_{Q'}^2$ where $Q' = q_0 \cdots q_{\ell'-1} \cdot r'$ and $\Delta' = \Delta^2/(Q/Q')$.

  1: $(\mathbf{b}, \mathbf{a}, \mathbf{d}) \leftarrow \mathsf{ct}_1 \otimes \mathsf{ct}_2$          $\triangleright$ Tensor product $(\mathbf{b} + \mathbf{a}s + \mathbf{d}s^2 \approx \Delta^2 \mathbf{m}_1 \mathbf{m}_2)$

  2: $(\mathbf{b}', \mathbf{a}') \leftarrow \mathsf{KeySwitch}_{\mathsf{rlk}}((0, \mathbf{d}))$         $\triangleright$ Relinearization $(\mathbf{b}' + \mathbf{a}'s \approx \mathbf{d}s^2)$

  3: $\mathsf{ct} \leftarrow (\mathbf{b}, \mathbf{a}) + (\mathbf{b}', \mathbf{a}')$

  4: $\mathsf{ct} \leftarrow \mathsf{RS}_{Q/Q'}(\mathsf{ct})$          $\triangleright$ Rational rescale by $Q/Q' \approx \Delta$

     **return** $\mathsf{ct}$

---

# FIG. 13

---

**Algorithm 2** Key switching in grafted moduli.

---

**Input:** $\mathsf{ct} = (\mathbf{b}, \mathbf{a}) \in \mathcal{R}_Q^2$ for $Q = Q_0' \cdot Q_1 \cdots Q_{d-2} \cdot Q_{d-1}'$ with a switching key $\mathsf{swk} = \{\mathsf{swk}_i\} \in \mathcal{R}_{PQ_{\max}}^{2 \times d}$.

**Output:** $\mathsf{ct}' \in \mathcal{R}_Q^2$ with a switched secret key.

1: $\mathbf{a} \leftarrow \mathsf{Inv\text{-}RS}_{Q_{\mathrm{inter}}/Q}(\mathbf{a})$       ▷ Inv-RS to $Q_{\mathrm{inter}} = Q_0 \cdots Q_{d-1}$

2: $\mathbf{a}_i \leftarrow \mathsf{ModUp}_{Q_i \to PQ_{\mathrm{inter}}}(\mathbf{a} \mod Q_i)$ for $i \in [d]$     ▷ ModUp to $PQ_{\mathrm{inter}}$

3: $\mathsf{ct} \leftarrow \sum_i \mathbf{a}_i \cdot (\mathsf{swk}_i \mod PQ_{\mathrm{inter}})$     ▷ External product in $PQ_{\mathrm{inter}}$

4: $\mathsf{ct}' \leftarrow \mathsf{ModDown}_{PQ_{\mathrm{inter}} \to Q}(\mathsf{ct})$       ▷ ModDown to $Q$

5: $\mathsf{ct}' \leftarrow \mathsf{ct}' + (\mathbf{b}, 0)$

   **return** $\mathsf{ct}'$

---

# FIG. 14

---

**Algorithm 3** Modulus adjustment.

---

**Input:** $\mathsf{ct} \in \mathcal{R}_Q^2$ with scaling factor $\Delta$.

**Output:** $\mathsf{ct}' \in \mathcal{R}_{Q'}^2$ with scaling factor $\Delta'$, where $Q > Q'\Delta_Q$.

1: Choose the smallest $Q_{\mathrm{mid}} \mid Q$ such that $Q \geq Q_{\mathrm{mid}} \gtrsim Q' \cdot \Delta$.

2: $\mathsf{ct} \leftarrow (\mathsf{ct} \bmod Q_{\mathrm{mid}})$        $\triangleright$ Modulus reduction to $Q_{\mathrm{mid}}$

3: $\mathsf{ct} \leftarrow \mathsf{ct} \cdot \lceil (Q_{\mathrm{mid}} \cdot \Delta')/(Q' \cdot \Delta) \rfloor$        $\triangleright$ Integer multiplication in $Q_{\mathrm{mid}}$

4: $\mathsf{ct}' = \mathsf{RS}_{Q_{\mathrm{mid}}/Q'}(\mathsf{ct})$        $\triangleright$ Rational rescale to $Q'$

     **return** $\mathsf{ct}'$

---

# FIG. 15

---

**Algorithm 4** Selecting grafted ciphertext moduli for multiplication.

---

**Input:** $Q = q_0 \cdots q_{\ell-1} \cdot r$ for input ciphertext with scaling factor $\Delta$ and word size $w = 2^\omega$.

**Output:** $Q' = q_0 \cdots q_{\ell'-1} \cdot r'$ for output ciphertext in Algorithm 1.

1: Choose $r' \mid r_{\text{top}}$ such that $|\log_2 r' - \log_2 \Delta|$ achieves the minimum.
2: $\ell' \leftarrow \lfloor (\omega \cdot \ell + \lceil \log_2 r \rceil - \lfloor \log_2 r' \rceil)/\omega \rfloor$
3: **return** $Q' = q_0 \cdots q_{\ell'-1} \cdot r'$

---

# FIG. 16

**Algorithm 5** Inv-RS with power-of-two sprouts.

**Input:** $\mathbf{a} \in \mathcal{R}_Q$ for $Q = \tilde{Q} \cdot 2^\beta$ and $R = \tilde{R} \cdot 2^\gamma$, where $\tilde{Q}$ and $\tilde{R}$ are odd integers and $\beta, \gamma \in \mathbb{Z} \geq 0$.

**Output:** Inv-RS$_R(\mathbf{a}) \in \mathcal{R}_{QR}$.

1: $\mathbf{b} \leftarrow \begin{cases} [2^\gamma]_{q_i} \cdot [\mathbf{a}]_{q_i} & (\mathrm{mod}\ q_i) \text{ for } i \in [\ell]\ , \\ 2^\gamma \cdot [\mathbf{a}]_{2^\beta} & (\mathrm{mod}\ 2^{\beta+\gamma})\ , \end{cases}$ $\qquad\qquad \triangleright\ \mathbf{b} \in \mathcal{R}_{\tilde{Q} \cdot 2^{\beta+\gamma}}$

2: $\mathbf{c} \leftarrow$ Inv-RS$_{\tilde{R}}(\mathbf{b})$ $\qquad\qquad\qquad\qquad\qquad\qquad \triangleright\ \mathbf{c} \in \mathcal{R}_{QR}$

    **return c**

# FIG. 17

---

**Algorithm 6** ModDown with power-of-two sprouts.

---

**Input:** $\mathbf{a} \in \mathcal{R}_{QR}$ for $Q = \tilde{Q} \cdot 2^{\beta}$ and $R = \tilde{R} \cdot 2^{\gamma}$, where $\tilde{Q}$ and $\tilde{R}$ are odd integers and $\beta, \gamma \in \mathbb{Z} \geq 0$.

**Output:** $\mathsf{ModDown}_{QR \to Q}(\mathbf{a}) \in \mathcal{R}_Q$.

1: $\mathbf{b} \leftarrow \mathsf{ModDown}_{QR \to \tilde{Q} \cdot 2^{\beta+\gamma}}(\mathbf{a})$ $\qquad\qquad\qquad\qquad\qquad \triangleright \mathbf{b} \in \mathcal{R}_{\tilde{Q} \cdot 2^{\beta+\gamma}}$

2: $\mathbf{c} \leftarrow \begin{cases} [2^{-\gamma}]_{q_i} \cdot ([\mathbf{b}]_{q_i} - [\mathbf{b}]_{2^{\gamma}}) \pmod{q_i} \text{ for } i \in [\ell] \ , \\ ([\mathbf{b}]_{2^{\beta+\gamma}} - [\mathbf{b}]_{2^{\gamma}})/2^{\gamma} \pmod{2^{\beta}} \ , \end{cases}$ $\qquad \triangleright \mathbf{c} \in \mathcal{R}_Q$

$\quad$ **return c**

---

Europäisches
Patentamt

European
Patent Office

Office européen
des brevets

## EUROPEAN SEARCH REPORT

**Application Number**

EP 25 15 7926

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | CHEON JUNG HEE ET AL: "Homomorphic Multiple Precision Multiplication for CKKS and Reduced Modulus Consumption", PROCEEDINGS OF THE 54TH ACM TECHNICAL SYMPOSIUM ON COMPUTER SCIENCE EDUCATION V. 2, ACMPUB27, NEW YORK, NY, USA, 15 November 2023 (2023-11-15), pages 696-710, XP059587337, DOI: 10.1145/3576915.3623086 ISBN: 979-8-4007-0073-6 * section 2 * | 1-15 | INV. H04L9/00 H04L9/30 |
| X | AGRAWAL RASHMI ET AL: "High-precision RNS-CKKS on fixed but smaller word-size architectures: theory and application", PROCEEDINGS OF THE ACM SIGCOMM 2023 CONFERENCE, ACMPUB27, NEW YORK, NY, USA, 26 November 2023 (2023-11-26), pages 23-34, XP059429046, DOI: 10.1145/3605759.3625257 ISBN: 979-8-4007-0256-3 * section 7 * | 1-15 | |
| X | HWANG INTAK ET AL: "Optimizing HE operations via Level-aware Key-switching Framework", PROCEEDINGS OF THE ACM SIGCOMM 2023 CONFERENCE, ACMPUB27, NEW YORK, NY, USA, 26 November 2023 (2023-11-26), pages 59-67, XP059429058, DOI: 10.1145/3605759.3625263 ISBN: 979-8-4007-0256-3 * section 2.2 * | 1-15 | **TECHNICAL FIELDS SEARCHED (IPC)**<br><br>H04L |

The present search report has been drawn up for all claims

| Place of search | Date of completion of the search | Examiner |
|---|---|---|
| Munich | 21 July 2025 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Homomorphic multiple precision multiplication for CKKS and reduced modulus consumption. **CHEON, J.H.** ; **CHO, W.** ; **KIM, J.** ; **STEHLE, D.** Proceedings of the ACM Conference on Computer and Communications Security (CCS). ACM Press, November 2023, 696-710